# EUROPEAN PATENT APPLICATION

(11) **EP 4 375 847 A1**
(43) Date of publication of application: **29.05.2024**
(21) Application number: 23315441.8
(22) Date of filing: 28.11.2023
(51) Int. Cl.: G06F 16/215, G06Q 10/02

(54) **DEVICE, SYSTEM AND METHOD FOR SYNCHRONIZING DATABASES**

(30) Priority: 28.11.2022 US 202263428258 P
(71) Applicant: Amadeus S.A.S., 06410 Biot (FR)
(72) Inventor: Guillon, Nicolas, 06410 Biot (FR); Grealou, Yves, 06410 Biot (FR)
(74) Representative: Samson & Partner Patentanwälte mbB

(57) **Abstract**

A device, system and method for synchronizing databases. A device or devices(s) maintain an event database and a shared event database, the event database comprising event data containers indicative of given events associated with a plurality of network addresses, and the shared event database comprising shareable data containers indicative of respective events associated with respective individual network addresses. The device or devices(s) compare a shareable data container, stored at the shared event database, with an event data container, stored at the event database. The device or devices(s), in response to determining that a respective event indicated by the shareable data container is associated with a given event indicated by the event data container, synchronize, via the communication interface, the event database and the shared event database by adding at least a portion of the shareable data container to the event data container.

## Description

### FIELD

The specification relates generally to synchronizing databases that store data containers indicative of provider objects.

### BACKGROUND

The provision of various products, including for example travel-related goods and services (e.g., flights, hotel reservations, car rentals and the like), typically requires various discrete entities to exchange data defining various aspects of the products. Examples of such entities, in the context of travel-related products, include airlines, travel agencies, end users, reservation systems, and the like. Although such entities may be configured to exchange data according to a standardized format (e.g., according to the eXtensible Markup Language (XML)-based New Distribution Capability (NDC) standard in the context of travel-related products), they may nonetheless employ different mechanisms to initiate the exchange of data. Furthermore, provider objects may be provisioned in relation to different communication devices and/or network addresses, and respective records of such may be stored individually in association with respective network addresses. However, some provider objects may be associated with other provider objects, for example as groups of provider objects associated with different network addresses may all be for similar and/or same types of destinations, dates, and the like. Synchronizing databases that are to store similar, or the same, information related to provider objects, can be challenging. In particular, when one database stores individual data containers (e.g., records) that are to be combined at another database into one data container, it can be challenging determining which individual data containers to combine, and/or to determine what portions of the individual data containers that are to be combined.

### SUMMARY

A first aspect of the present specification provides a method comprising: maintaining, via one or more computing devices, an event database and a shared event database, the event database comprising event data containers indicative of given events associated with a plurality of network addresses, and the shared event database comprising shareable data containers indicative of respective events associated with respective individual network addresses; comparing, via the one or more computing devices, a shareable data container, stored at the shared event database, with an event data container, stored at the event database; and in response to determining, via the one or more computing devices, that a respective event indicated by the shareable data container is associated with a given event indicated by the event data container, synchronizing the event database and the shared event database by adding at least a portion of the shareable data container to the event data container.

At the method of the first aspect, the at least a portion of the shareable data container that is added to the event data container may be indicated as being shareable in the shareable data container.

At the method of the first aspect, the event data container may be further indicative of a plurality of sub-events that are components of the given event, and the method may further comprise: analyzing the event data container to identify a given sub-event of the given event; generating a group of network addresses associated with the given sub-event; determining that a change to the given sub-event has occurred; and in response to determining that the change to the given sub-event has occurred, providing a message to the group of network addresses indicating the change to the given sub-event.

At the method of the first aspect, the event data container is further indicative of a plurality of sub-events that are components of the given event, and the method may further comprise: receiving, from an event management device, a request to join a given sub-event at the event data container, the request associated with a given network address; one or more of: comparing the request with at least one given rule; and requesting approval of the request; and when one or more of the request meets the at least one given rule and the request is approved: synchronizing the event database and the shared event database by adding data indicative of the given sub-event to a respective shareable data container associated with the given network address and to the event data container.

The method of the first aspect may further comprise: determining that one or more further respective events indicated by one or more respective further shareable data containers are associated with the given event indicated by the event data container, the one or more further respective events associated with further respective individual network addresses; and synchronizing at least a further portion of the event database and the shared event database by adding at least a respective portion of the one or more respective further shareable data containers to the event data container. In some of these examples, method of the first aspect may further comprise: requesting, via a given network address associated with the event data container, approval of one or more of: the respective event and at least one of the one or more further respective events; in response to receiving the approval, updating the event data container to indicate the approval; and in response to receiving a denial of the approval, providing a notification of the denial to an event management device to cancel one or more of: the respective event and at least one of the one or more further respective events.

At the method of the first aspect, the event data container may comprise at least a portion of the shareable data container and at least a respective portion of a further shareable data container associated with the given event, and the method may further comprise: analyzing respective data from the shareable data container and the further shareable data container stored at the event data container to determine threshold-based inconsistencies therebetween; providing, to respective network addresses associated with the shareable data container and the further shareable data container, respective links to an event management device that resolve the inconsistencies; receiving, from the event management device, further data indicative of updated respective events associated with the respective network addresses, the further data resolving the inconsistencies; and updating the event data container and one or more of the shareable data container and the further shareable data container, based on the further data.

The method of the first aspect may further comprise: generating the event data container when at least two shareable data containers stored in the shared event database share common data.

The method of the first aspect may further comprise: generating the event data container based on a request from one or more of: a communication device; an event management device; and a messaging application.

A second aspect of the present specification provides a device comprising: a communication interface; and a controller configured to: maintain an event database and a shared event database, the event database comprising event data containers indicative of given events associated with a plurality of network addresses, and the shared event database comprising shareable data containers indicative of respective events associated with respective individual network addresses; compare a shareable data container, stored at the shared event database, with an event data container, stored at the event database; and in response to determining that a respective event indicated by the shareable data container is associated with a given event indicated by the event data container, synchronize, via the communication interface, the event database and the shared event database by adding at least a portion of the shareable data container to the event data container.

At the device of the second aspect, the at least a portion of the shareable data container that is added to the event data container may be indicated as being shareable in the shareable data container.

At the device of the second aspect, the event data container is further indicative of a plurality of sub-events that are components of the given event, and the controller may be further configured to: analyze the event data container to identify a given sub-event of the given event; generate a group of network addresses associated with the given sub-event; determine that a change to the given sub-event has occurred; and in response to determining that the change to the given sub-event has occurred, provide a message to the group of network addresses indicating the change to the given sub-event.

At the device of the second aspect, the event data container is further indicative of a plurality of sub-events that are components of the given event, and the controller may be further configured to: receive, from an event management device, a request to join a given sub-event at the event data container, the request associated with a given network address; one or more of: compare the request with at least one given rule; and request approval of the request; and when one or more of the request meets the at least one given rule and the request is approved: synchronize the event database and the shared event database by adding data indicative of the given sub-event to a respective shareable data container associated with the given network address and to the event data container.

At the device of the second aspect, the controller may be further configured to: determine that one or more further respective events indicated by one or more respective further shareable data containers are associated with the given event indicated by the event data container, the one or more further respective events associated with further respective individual network addresses; and synchronize at least a further portion of the event database and the shared event database by adding at least a respective portion of the one or more respective further shareable data containers to the event data container. In some of these examples the controller may be further configured to: request, via a given network address associated with the event data container, approval of one or more of: the respective event and at least one of the one or more further respective events; in response to receiving the approval, update the event data container to indicate the approval; and in response to receiving a denial of the approval, provide a notification of the denial to an event management device to cancel one or more of: the respective event and at least one of the one or more further respective events.

At the device of the second aspect, the event data container may comprise at least a portion of the shareable data container and at least a respective portion of a further shareable data container associated with the given event, and the controller may be further configured to: analyze respective data from the shareable data container and the further shareable data container stored at the event data container to determine threshold-based inconsistencies therebetween; provide, to respective network addresses associated with the shareable data container and the further shareable data container, respective links to an event management device that resolve the inconsistencies; receive, from the event management device, further data indicative of updated respective events associated with the respective network addresses, the further data resolving the inconsistencies; and update the event data container and one or more of the shareable data container and the further shareable data container, based on the further data.

At the device of the second aspect, the controller may be further configured to: generate the event data container when at least two shareable data containers stored in the shared event database share common data.

At the device of the second aspect, the controller may be further configured to: generate the event data container based on a request from one or more of: a communication device; an event management device; and a messaging application.

A third aspect of the specification provides a non-transitory computer-readable medium storing a computer program, wherein execution of the computer program is to implement a method comprising: maintaining, via one or more computing devices, an event database and a shared event database, the event database comprising event data containers indicative of given events associated with a plurality of network addresses, and the shared event database comprising shareable data containers indicative of respective events associated with respective individual network addresses; comparing, via the one or more computing devices, a shareable data container, stored at the shared event database, with an event data container, stored at the event database; and in response to determining, via the one or more computing devices, that a respective event indicated by the shareable data container is associated with a given event indicated by the event data container, synchronizing the event database and the shared event database by adding at least a portion of the shareable data container to the event data container.

At the method of the third aspect, the at least a portion of the shareable data container that is added to the event data container may be indicated as being shareable in the shareable data container.

At the method of the third aspect, the event data container may be further indicative of a plurality of sub-events that are components of the given event, and the method may further comprise: analyzing the event data container to identify a given sub-event of the given event; generating a group of network addresses associated with the given sub-event; determining that a change to the given sub-event has occurred; and in response to determining that the change to the given sub-event has occurred, providing a message to the group of network addresses indicating the change to the given sub-event.

At the method of the third aspect, the event data container is further indicative of a plurality of sub-events that are components of the given event, and the method may further comprise: receiving, from an event management device, a request to join a given sub-event at the event data container, the request associated with a given network address; one or more of: comparing the request with at least one given rule; and requesting approval of the request; and when one or more of the request meets the at least one given rule and the request is approved: synchronizing the event database and the shared event database by adding data indicative of the given sub-event to a respective shareable data container associated with the given network address and to the event data container.

The method of the third aspect may further comprise: determining that one or more further respective events indicated by one or more respective further shareable data containers are associated with the given event indicated by the event data container, the one or more further respective events associated with further respective individual network addresses; and synchronizing at least a further portion of the event database and the shared event database by adding at least a respective portion of the one or more respective further shareable data containers to the event data container. In some of these examples, method of the third aspect may further comprise: requesting, via a given network address associated with the event data container, approval of one or more of: the respective event and at least one of the one or more further respective events; in response to receiving the approval, updating the event data container to indicate the approval; and in response to receiving a denial of the approval, providing a notification of the denial to an event management device to cancel one or more of: the respective event and at least one of the one or more further respective events.

At the method of the third aspect, the event data container may comprise at least a portion of the shareable data container and at least a respective portion of a further shareable data container associated with the given event, and the method may further comprise: analyzing respective data from the shareable data container and the further shareable data container stored at the event data container to determine threshold-based inconsistencies therebetween; providing, to respective network addresses associated with the shareable data container and the further shareable data container, respective links to an event management device that resolve the inconsistencies; receiving, from the event management device, further data indicative of updated respective events associated with the respective network addresses, the further data resolving the inconsistencies; and updating the event data container and one or more of the shareable data container and the further shareable data container, based on the further data.

The method of the third aspect may further comprise: generating the event data container when at least two shareable data containers stored in the shared event database share common data.

The method of the third aspect may further comprise: generating the event data container based on a request from one or more of: a communication device; an event management device; and a messaging application.

A fourth aspect of the present specification provides a method comprising: maintaining, via one or more computing devices, an event database and a shared event database, the event database comprising event data containers indicative of given events associated with a plurality of network addresses, and the shared event database comprising shareable data containers indicative of respective provider objects associated with respective individual network addresses; comparing, via the one or more computing devices, a shareable data container, stored at the shared event database, with an event data container, stored at the event database; and in response to determining, via the one or more computing devices, that a respective provider object indicated by the shareable data container is associated with a given event indicated by the event data container, synchronizing the event database and the shared event database by adding at least a portion of the shareable data container to the event data container.

At the method of the fourth aspect, the at least a portion of the shareable data container that is added to the event data container may be indicated as being shareable in the shareable data container.

At the method of the fourth aspect, the event data container may be further indicative of a plurality of sub-events associated with given respective provider objects that are components of the given event, and the method may further comprise: analyzing the event data container to identify a given sub-event, associated with a particular given respective provider object, of the given event; generating a group of network addresses associated with the particular given respective provider object; determining that a change to the particular given respective provider object has occurred; and in response to determining that the change to the particular given respective provider object has occurred, providing a message to the group of network addresses indicating the change to the particular given respective provider object.

At the method of the fourth aspect, the event data container is further indicative of a plurality of sub-events associated with given respective provider objects that are components of the given event, and the method may further comprise: receiving, from an event management device, a request to join a given sub-event, associated with a particular given respective provider object, at the event data container, the request associated with a given network address; one or more of: comparing the request with at least one given rule; and requesting approval of the request; and when one or more of the request meets the at least one given rule and the request is approved: synchronizing the event database and the shared event database by adding data indicative of the particular given respective provider object to a respective shareable data container associated with the given network address and to the event data container.

The method of the fourth aspect may further comprise: determining that one or more further respective provider objects indicated by one or more respective further shareable data containers are associated with the given event indicated by the event data container, the one or more further respective provider objects associated with further respective individual network addresses; and synchronizing at least a further portion of the event database and the shared event database by adding at least a respective portion of the one or more respective further shareable data containers to the event data container. In some of these examples, method of the fourth aspect may further comprise: requesting, via a given network address associated with the event data container, approval of one or more of: the respective provider object and at least one of the one or more further respective provider objects; in response to receiving the approval, updating the event data container to indicate the approval; and in response to receiving a denial of the approval, providing a notification of the denial to an event management device to cancel one or more of: the respective provider object and at least one of the one or more further respective provider objects.

At the method of the fourth aspect, the event data container may comprise at least a portion of the shareable data container and at least a respective portion of a further shareable data container associated with the given event, and the method may further comprise: analyzing respective data from the shareable data container and the further shareable data container stored at the event data container to determine threshold-based inconsistencies therebetween; providing, to respective network addresses associated with the shareable data container and the further shareable data container, respective links to an event management device that resolve the inconsistencies; receiving, from the event management device, further data indicative of updated respective provider objects associated with the respective network addresses, the further data resolving the inconsistencies; and updating the event data container and one or more of the shareable data container and the further shareable data container, based on the further data.

The method of the fourth aspect may further comprise: generating the event data container when at least two shareable data containers stored in the shared event database share common data.

The method of the fourth aspect may further comprise: generating the event data container based on a request from one or more of: a communication device; an event management device; and a messaging application.

A fifth aspect of the present specification provides a device comprising: a communication interface; and a controller configured to: maintain an event database and a shared event database, the event database comprising event data containers indicative of given events associated with a plurality of network addresses, and the shared event database comprising shareable data containers indicative of respective provider objects associated with respective individual network addresses; compare a shareable data container, stored at the shared event database, with an event data container, stored at the event database; and in response to determining that a respective provider object indicated by the shareable data container is associated with a given event indicated by the event data container, synchronize, via the communication interface, the event database and the shared event database by adding at least a portion of the shareable data container to the event data container.

At the device of the fifth aspect, the at least a portion of the shareable data container that is added to the event data container may be indicated as being shareable in the shareable data container.

At the device of the fifth aspect, the event data container is further indicative of a plurality of sub-events, associated with given respective provider objects that are components of the given event, and the controller may be further configured to: analyze the event data container to identify a given sub-event, associated with a particular given respective provider object, of the given event; generate a group of network addresses associated with the particular given respective provider object; determine that a change to the particular given respective provider object has occurred; and in response to determining that the change to the particular given respective provider object has occurred, provide a message to the group of network addresses indicating the change to the particular given respective provider object.

At the device of the fifth aspect, the event data container is further indicative of a plurality of sub-events, associated with given respective provider objects, that are components of the given event, and the controller may be further configured to: receive, from an event management device, a request to join a particular given respective provider object, associated with given sub-event, at the event data container, the request associated with a given network address; one or more of: compare the request with at least one given rule; and request approval of the request; and when one or more of the request meets the at least one given rule and the request is approved: synchronize the event database and the shared event database by adding data indicative of the particular given respective provider object to a respective shareable data container associated with the given network address and to the event data container.

At the device of the fifth aspect, the controller may be further configured to: determine that one or more further respective provider objects indicated by one or more respective further shareable data containers are associated with the given event indicated by the event data container, the one or more further respective provider objects associated with further respective individual network addresses; and synchronize at least a further portion of the event database and the shared event database by adding at least a respective portion of the one or more respective further shareable data containers to the event data container. In some of these examples the controller may be further configured to: request, via a given network address associated with the event data container, approval of one or more of: the respective provider object and at least one of the one or more further respective provider objects; in response to receiving the approval, update the event data container to indicate the approval; and in response to receiving a denial of the approval, provide a notification of the denial to an event management device to cancel one or more of: the respective provider object and at least one of the one or more further respective provider objects.

At the device of the fifth aspect, the event data container may comprise at least a portion of the shareable data container and at least a respective portion of a further shareable data container associated with the given event, and the controller may be further configured to: analyze respective data from the shareable data container and the further shareable data container stored at the event data container to determine threshold-based inconsistencies therebetween; provide, to respective network addresses associated with the shareable data container and the further shareable data container, respective links to an event management device that resolve the inconsistencies; receive, from the event management device, further data indicative of updated respective provider objects associated with the respective network addresses, the further data resolving the inconsistencies; and update the event data container and one or more of the shareable data container and the further shareable data container, based on the further data.

At the device of the fifth aspect, the controller may be further configured to: generate the event data container when at least two shareable data containers stored in the shared event database share common data.

At the device of the fifth aspect, the controller may be further configured to: generate the event data container based on a request from one or more of: a communication device; an event management device; and a messaging application.

A sixth aspect of the specification provides a non-transitory computer-readable medium storing a computer program, wherein execution of the computer program is to implement a method comprising: maintaining, via one or more computing devices, an event database and a shared event database, the event database comprising event data containers indicative of given events associated with a plurality of network addresses, and the shared event database comprising shareable data containers indicative of respective provider objects associated with respective individual network addresses; comparing, via the one or more computing devices, a shareable data container, stored at the shared event database, with an event data container, stored at the event database; and in response to determining, via the one or more computing devices, that a respective provider object indicated by the shareable data container is associated with a given event indicated by the event data container, synchronizing the event database and the shared event database by adding at least a portion of the shareable data container to the event data container.

At the method of the sixth aspect, the at least a portion of the shareable data container that is added to the event data container may be indicated as being shareable in the shareable data container.

At the method of the sixth aspect, the event data container may be further indicative of a plurality of sub-events associated with given respective provider objects that are components of the given event, and the method may further comprise: analyzing the event data container to identify a given sub-event, associated with a particular given respective provider object, of the given event; generating a group of network addresses associated with the particular given respective provider object; determining that a change to the particular given respective provider object has occurred; and in response to determining that the change to the particular given respective provider object has occurred, providing a message to the group of network addresses indicating the change to the particular given respective provider object.

At the method of the sixth aspect, the event data container is further indicative of a plurality of sub-events associated with given respective provider objects that are components of the given event, and the method may further comprise: receiving, from an event management device, a request to join a given sub-event, associated with a particular given respective provider object, at the event data container, the request associated with a given network address; one or more of: comparing the request with at least one given rule; and requesting approval of the request; and when one or more of the request meets the at least one given rule and the request is approved: synchronizing the event database and the shared event database by adding data indicative of the particular given respective provider object to a respective shareable data container associated with the given network address and to the event data container.

The method of the sixth aspect may further comprise: determining that one or more further respective provider objects indicated by one or more respective further shareable data containers are associated with the given event indicated by the event data container, the one or more further respective provider objects associated with further respective individual network addresses; and synchronizing at least a further portion of the event database and the shared event database by adding at least a respective portion of the one or more respective further shareable data containers to the event data container. In some of these examples, method of the sixth aspect may further comprise: requesting, via a given network address associated with the event data container, approval of one or more of: the respective provider object and at least one of the one or more further respective provider objects; in response to receiving the approval, updating the event data container to indicate the approval; and in response to receiving a denial of the approval, providing a notification of the denial to an event management device to cancel one or more of: the respective provider object and at least one of the one or more further respective provider objects.

At the method of the sixth aspect, the event data container may comprise at least a portion of the shareable data container and at least a respective portion of a further shareable data container associated with the given event, and the method may further comprise: analyzing respective data from the shareable data container and the further shareable data container stored at the event data container to determine threshold-based inconsistencies therebetween; providing, to respective network addresses associated with the shareable data container and the further shareable data container, respective links to an event management device that resolve the inconsistencies; receiving, from the event management device, further data indicative of updated respective provider objects associated with the respective network addresses, the further data resolving the inconsistencies; and updating the event data container and one or more of the shareable data container and the further shareable data container, based on the further data.

The method of the sixth aspect may further comprise: generating the event data container when at least two shareable data containers stored in the shared event database share common data.

The method of the sixth aspect may further comprise: generating the event data container based on a request from one or more of: a communication device; an event management device; and a messaging application.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for synchronizing databases, according to non-limiting examples.
FIG. 2 depicts a device for synchronizing databases, according to non-limiting examples.
FIG. 3 depicts a flowchart of a method for synchronizing databases, according to non-limiting examples.
FIG. 4 depicts the system of FIG. 1 implementing aspects of a method for synchronizing databases, according to non-limiting examples.
FIG. 5 depicts the system of FIG. 1 implementing further aspects of the method for synchronizing databases, according to non-limiting examples.
FIG. 6 depicts the system of FIG. 1 implementing further aspects of the method for synchronizing databases, according to non-limiting examples.
FIG. 7A and FIG. 7B depicts an example of a shareable data container of the system of FIG. 1, according to non-limiting examples.
FIG. 8 depicts an example of an event data container of the system of FIG. 1, according to non-limiting examples.
FIG. 9 depicts an example of a graphic user interface used to populate a shareable data container and/or an event data container of the system of FIG. 1, according to non-limiting examples.
FIG. 10 depicts an example of a graphic user interface used to approve events and/or provider objects associated with a shareable data container and/or an event data container of the system of FIG. 1, according to non-limiting examples.
FIG. 11 depicts an example of a graphic user interface used to generate an event data container of the system of FIG. 1, according to non-limiting examples; FIG. 11 is provided over three drawing sheets.

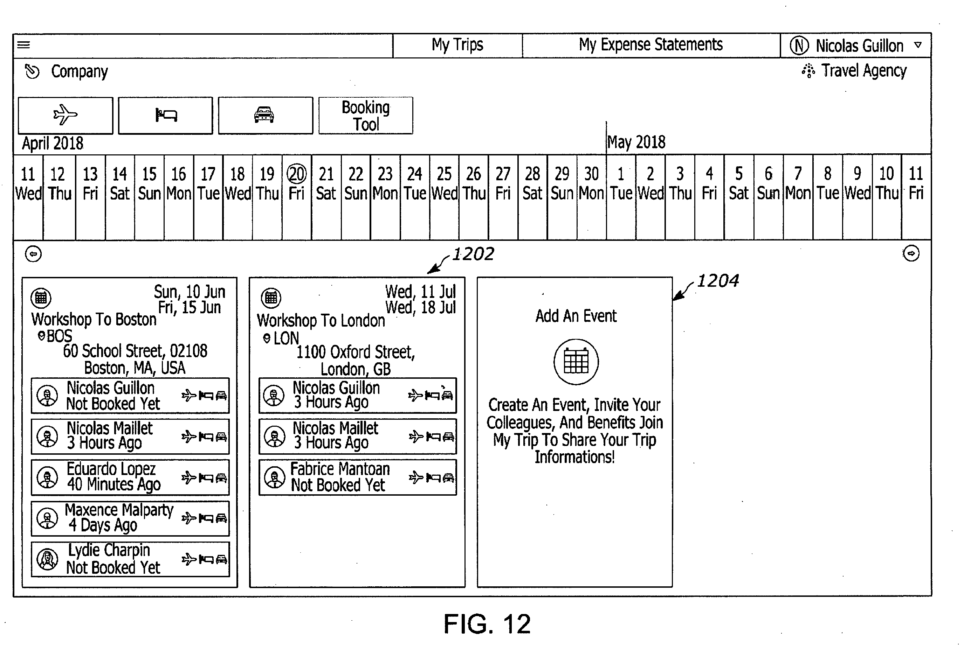

FIG. 12 depicts an example of a graphic user interface used to view information from one or more event data containers of the system of FIG. 1, according to non-limiting examples.

### DETAILED DESCRIPTION

Synchronizing databases that are to store similar, or the same, information related to provider objects, can be challenging. In particular, when one database stores individual data containers (e.g., records) that are to be combined at another database into one data container, it can be challenging determining which individual data containers to combine, and/or to determine what portions of the individual data containers that are to be combined.

A further technical challenge is that the individual data containers may be indicative of respective provider objects associated with events that are to occur in tandem with a given event indicated by the one data container into which the individual data containers, or portions thereof, are to be combined. For example, the given event may comprise a series of sub-events represented by individual provider objects, and the respective events of the individual data containers may indicate such provider objects associated with such sub-events; some of the subevents may overlap and/or be the same as each other and/or similar to each other, while others may not overlap. Coordinating such provider objects associated with sub-events may be challenging, for example to ensure that such provider objects are provisioned efficiently and/or without undue use of processing resources and/or expense.

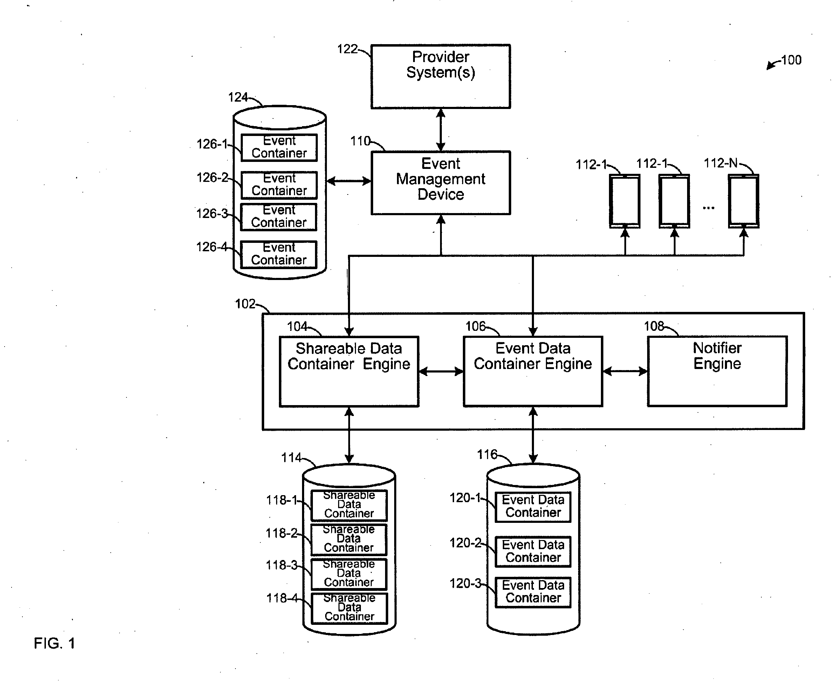

FIG. 1 depicts a system 100 for synchronizing databases, which may mitigate and/or reduce at least a portion of the aforementioned technical challenges. The components of the system 100 are generally in communication via communication links, which are depicted in FIG. 1, and throughout the present specification, as double-ended arrows between respective components. The communication links include any suitable combination of wireless and/or wired communication networks and, similarly, the communication links may include any suitable combination of wireless and/or wired links.

The system 100 will furthermore be described with respect to engines. As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

In particular the system 100 comprises one or more computing devices 102 that comprise a shareable data container engine 104, an event data container engine 106 and a notifier engine 108; the functionality of the engines 104, 106, 108 will be described herein.

The one or more computing devices 102 may comprise any suitable combination of computing devices including, but not limited to, one or more servers, one or more cloud computing devices, and the like.

As depicted, the system 100 further comprises an event management device 110 and a plurality of communication devices 112-1, 112-2...112-N. Functionality of the event management device 110 and the communication devices 112 will be described herein. However, the event management device 110 may comprise any suitable combination of computing devices including, but not limited to, one or more servers, one or more cloud computing devices, and the like.

For simplicity, the plurality of communication devices 112-1, 112-2...112-N will be interchangeably referred to hereafter, collectively, as the communication devices 112 and, generically, as a communication device 112. The number "N" may be any suitable number that is two or higher (e.g., while three of the "N" number of communication devices 112 are depicted, the system 100 may comprise as few as two communication devices 112). For example, N may be in the tens, hundreds, etc.

Furthermore, while the communication devices 112 are depicted as mobile communication devices 112, the communication devices 112 may comprise any suitable communication devices including, but not limited to, laptop devices, personal computers, and the like. It is further understood that the communication devices 112 are each associated with a respective network address, such as an email address, a phone number, a messaging address, and the like. It is further understood that communications with the communication devices 112 may occur via suitable respective applications being operated by the communication devices 112, including, but not limited to, email applications, messaging applications, conferencing applications, and/or any suitable application where messages may be exchanged, and the like.

As depicted the system 100 further comprises a shared event database 114 and an event database 116.

In particular, the shared event database 114 comprises shareable data containers 118-1, 118-2, 118-3, 118-4 (e.g., shareable data containers 118 and/or a shareable data container 118) indicative of respective events associated with respective individual network addresses, such as network addresses associated with the communication devices 112. For example, the shareable data container 118-1 may be associated with a network address associated with the communication device 112-1, and the shareable data container 118-2 may be associated with a network address associated with the communication device 112-2.

Furthermore, while only four shareable data containers 118 are depicted, the shared event database 114 may store any suitable number of shareable data containers 118.

In particular, the event database 116 comprises event data containers 120-1, 120-2, 120-3 (e.g., event data containers 120 and/or an event data container 120) indicative of given events that include a plurality of network addresses, including, but not limited to, network addresses associated with the communication devices 112, as will be presently explained.

It is further understood that the event data containers 120 are generally understood to be associated with different events, as will be presently explained.

In particular, the term "event" as used herein, is understood to include and/or define at least one event associated with one or more provider objects, and/or may include or define a plurality of "sub-events" associated with provider objects, which include and/or define at least one sub-event associated with a provider object, and/or may be components of a larger event associated with a plurality of provider objects. For example, an event, as used herein may be associated with one or more provider objects that are associated with one or more sub-events that involve underlying technical steps related to the provider objects, which may include, but is not limited to, communications between computing devices and/or communication devices related to the provider objects (e.g., delivery thereof), processing of data related to the provider objects and/or use of processing resources related to the provider objects. The system 100, and in particular the one or more computing devices 102, is generally configured to synchronize the databases 114, 116, which generally leads to a reduction in communications between computing devices and/or communication devices, processing of data and/or use of processing resources, as will be explained herein.

Provider objects, in the examples discussed herein, may comprise provider objects and/or data records, which correspond to products and/or items and/or events, such as travel-related goods and services (e.g., flights, hotel reservations, car rentals and the like), provided by a provider system. More specifically, the products and/or items and/or events discussed in the examples below may be flight tickets, car rentals, hotel rentals, and related services (e.g., limo pickup services, excursions at a destination, baggage check services, in-flight food, entertainment, pet-related services, and the like). However, as will be apparent to those skilled in the art, the systems and methods discussed below can also be applied to various other types of data objects and/or items including, but not limited to, data objects that correspond to any suitable products and/or any suitable items available (e.g., for purchase, and the like) from any suitable website, and the like.

Delivery of the items mentioned above is typically controlled by a provider entity, such as an airline, a car rental provider, a hotel provider, and the like, in the case of the items discussed in connection with the travel-industry related examples provided herein. The system 100 includes one or more provider systems 122 (e.g., one or more servers or other suitable computing devices), which in this example is operated by one or more provider entities. In particular, the event management device 110 may be in communication with the one or more provider systems 122 to request and/or provision such provider objects. While not depicted, the event management device 110 may be in communication with an intermediation server, which may intermediate between the event management device 110 and the one or more provider systems 122, for example to manage searches for provider objects, initiated by the event management device 110, amongst a plurality of provider systems 122, and return results of the search from the plurality of provider systems 122 to the event management device 110. Indeed, one or more of the communication devices 112 may be used to communicate with the event management device 110 to request such a search (e.g., on behalf of a user operating a communication device 112).

Hence, it is understood that the event management device 110, in the present example, may be operated by a travel agent entity, and therefore generates and provides requests for provider objects (e.g., representing products, which may be for purchase), and/or requests to purchase products (e.g., represented by the provider objects), to the provider system 122, on behalf of end users (e.g., travelers) who may be using the communication devices 112 to communicate with the event management device 110.

The system 100 may include a plurality of event management devices 110, although only one event management device 110 is shown in FIG. 1 for illustrative purposes.

The system 100 may include a plurality of provider systems 122, each operated by respective provider entities (e.g., various airlines), although only one provider system 122 is shown for illustrative purposes. The provider objects may be in any suitable format including, but not limited to Edifact recommendations in the context of Global Distribution System (GDS)-based data exchange, offer records in the context of New Distribution Capability (NDC)-based data exchange, and/or any other suitable format. Indeed, the provider objects may comprise data objects and/or data records, for example storing an Edifact recommendation or an NDC offer, and/or any other suitable data representing at least one item provided by the provider system 122.

A provider object is understood to define an item and/or event, or a combination of items and/or events, which may be offered for purchase (e.g., by end users of the items/events) including, but not limited to one or more of flights, train rides, hotel stays, airport lounge access, seat upgrades, baggage check services, in-flight food, entertainment, pickup services, excursion services, pet-related services, and the like, and/or associated services. Thus, in some examples, a provider object may define a flight operated by the provider entity, and/or services associated with the flight, or proposed as standalone services. Each provider object therefore may contain various fields (e.g., data fields), and the like. Certain fields define item attributes, such as product object identifiers (e.g., service identifiers, item identifiers, product identifiers and the like), locations, dates and times corresponding to the products (e.g., flight times and other itinerary data). The type of fields and/or data of a provider object may depend on a type of a provider object. For example, provider objects corresponding to flights may include flight identifiers, whereas provider objects corresponding to other travel-related items, such as an offer for accessing an airport lounge and/or an offer for a premium seat upgrade, may include information related to the lounge, the premium seat, etc.

Returning to the event data containers 120, an event data container 120 may indicate a plurality of sub-events related to provider objects, which are understood to be associated with a plurality of network addresses, such as network addresses associated with two or more of the communication devices 112.

In contrast, a shareable data container 118 may be similar to an event data container 120 but is understood to be associated with provider objects associated with one network address and/or one user associated with one communication device 112. While in certain examples, a shareable data container 118 may be associated with more than one network address, such network addresses are understood to be associated with either one communication device 112 or related communication devices 112, such as a plurality of communication devices 112 associated with one user. For example, two of the communication devices 112 may be used by one user to receive messages via one network address (e.g., an email address) or two network addresses (e.g., an email address and a telephone number) or three network addresses (e.g., an email address, a telephone number and a messaging address). Regardless, a shareable data container 118 is understood to indicate and/or define events associated with provider objects associated with one network address or related network addresses (e.g., related via one user).

Put another way, a shareable data container 118 may define events associated with provider objects related to one network address associated with one user, and an event data container 120 may define events associated with provider objects related to a plurality of network addresses associated with a plurality of users.

Hence, hereafter, while reference is made to events, it is understood that such events are represented by provider objects in the system 100. Hence, the term "event" and "provider object" may, in many instances be interchangeable. Put another way, it is understood that events referred to herein are defined by provider objects and/or data records in any suitable format.

As will be explained herein, in some examples, all of a shareable data container 118 may be shareable or only a portion of a shareable data container 118 may be shareable. For example, at least a portion of a shareable data container 118 may be shareable via indications in the shareable data container 118 that indicate which portions of the data is shareable.

As will be explained herein, a respective event and/or provider object indicated by a shareable data container 118 may be associated with a given event and/or plurality of provider objects indicated by an event data container 120. Furthermore, the event data container engine 106 may be configured to make such a determination and, in response to determining that a respective event indicated by a shareable data container 118 is associated with a given event indicated by an event data container 120, the event data container engine 106 may be configured to synchronize the event database 116 and the shared event database 114 by adding at least a portion of the shareable data container 118 to the event data container 120; for example the at least a portion of the shareable data container 118 that is added to the event data container 120 may be indicated as being shareable in the shareable data container 118.

For example, an event data container 120 may be associated with a given event that is defined by provider objects associated with two or more of the communication devices 112 and/or two or more users, though, initially, only one, or none, of the communication devices 112 and/or users may be associated with the given event. For example, initially, the given event may be defined by data indicating a location and/or dates of the given event, and it is understood that the event data container 120 may later be populated with fields and/or data defining provider objects associated with two or more of the communication devices 112 and/or two or more users.

However, as will be explained herein, a communication device 112 may interact with the event management device 110 to generate a respective event (e.g., an associated provider object); the event management device 110 may store an indication of a generated respective event/provider object at an optional database 124, for example in an event container 126-1, 126-2, 126-3, 126-4 (e.g., event containers 126 and/or an event container 126). However, the event management device 110 may further communicate with the shareable data container engine 104 to provide the shareable data container engine 104 with data indicative of the generated respective event/provider object to generate and store a respective shareable data container 118 at the database 114.

Hence, as depicted, the event management device 110 has generated four event containers 126-1, 126-2, 126-3, 126-4, for example respectively associated with respective communication devices 112-1, 112-2, 112-3, 112-4. Furthermore, respective data defining one or more associated provider objects from the event containers 126-1, 126-2, 126-3, 126-4 -1 may be provided from the event management device 110 to the shareable data container engine 104, which may generate respective shareable data containers 118-1, 118-2, 118-3, 118-4.

In general, the event data container engine 106 may communicate with the shareable data container engine 104 to receive indications and/or notices of new shareable data containers 118 being generated, and the like, and/or receive copies of shareable data containers 118 and/or portions thereof, to compare with existing event data containers 120 to determine whether a respective event/provider object indicated by a shareable data container 118 is associated with a given event/provider object(s) indicated by an event data container 120. As has already been described, in response to determining that a respective event/provider object indicated by a shareable data container 118 is associated with a given event/provider object(s) indicated by an event data container 120, the event data container engine 106 may be configured to synchronize the event database 116 and the shared event database 114 by adding at least a portion of the shareable data container 118 to the event data container 120; for example the at least a portion of the shareable data container 118 that is added to the event data container 120 may be indicated as being shareable in the shareable data container 118.

In general, while not depicted, communications between the shareable data container engine 104, the event data container engine 106, and the event management device 110 may occur via one or more Applications Programming Interfaces (APIs). For example, the event management device 110 may communicate with the shareable data container engine 104, the event data container engine 106 via respective APIs thereof, and the shareable data container engine 104 and the event data container engine 106 may communicate via respective APIs thereof.

Furthermore, the notifier engine 108 may provide communications to the communication devices 112, for example from the event data container engine 106.

It is further understood that the one or more computing devices 102, the communication devices 112 and the databases 114, 116 may all be associated with, and/or managed by, a same entity, such as a business, organization, and the like, which may also have registered with the event management device 110 such that the event management device 110 may provide provider-object related services to the entity.

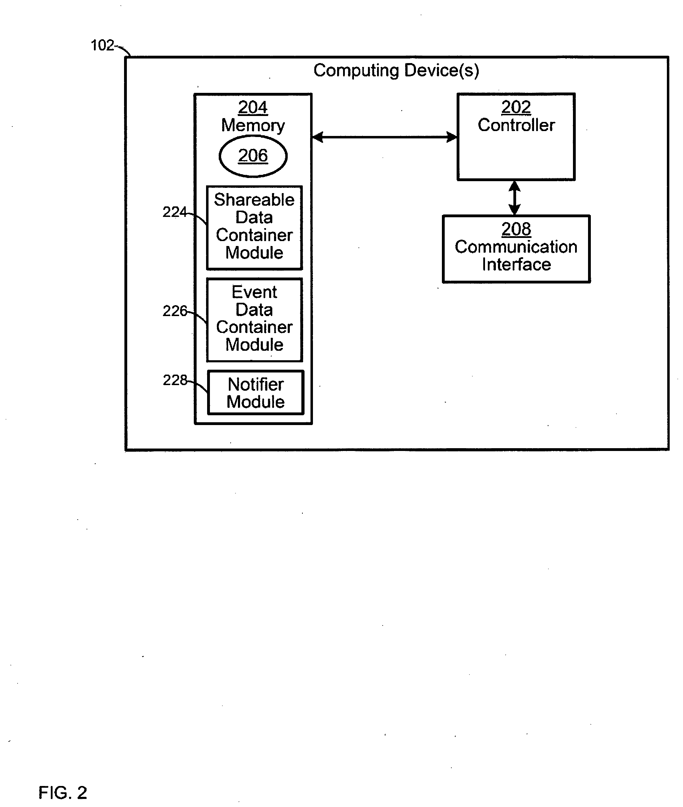

Turning to FIG. 2, before discussing the functionality of the system 100 in greater detail, certain components of the one or more computing devices 102 will be discussed in greater detail. While depicted as one device, the one or more computing devices 102 may comprise one or more computing devices and/or one or more servers and/or one or more cloud computing devices that may be geographically distributed.

As shown in FIG. 2, the one or more computing devices 102 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the one or more computing devices 102 to communicate with the other computing devices of the system 100, though it is understood such communication may occur locally when components of the system 100 are combined (e.g., such as one computing device 102 operating both the engines 104, 106). The communication interface 208 therefore may include any necessary components (e.g., network interface controllers (NICs), radio units, and the like) to communicate via a network. The specific components of the communication interface 208 may be selected based upon the nature of a network used to communicate, and/or local communication between components of the system 100, and the like. The one or more computing devices 102 can also include input and output devices connected to the controller 202, such as keyboards, mice, displays, and the like (not shown).

The components of the one or more computing devices 102 mentioned above can be deployed in a single enclosure, or in a distributed format. In some examples, therefore, the one or more computing devices 102 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the one or more computing devices 102; regardless, the controller 202 is understood to have access to the memory 204.

The memory 204 also stores a plurality of computer-readable programming instructions, executable by the controller 202, in the form of various applications, including the application 206. As will be understood by those skilled in the art, the controller 202 executes the instructions of the application 206 (and any other suitable applications) in order to perform various actions defined by the instructions contained therein. In the description below, the controller 202, and more generally the one or more computing devices 102, are said to be configured to perform those actions. It will be understood that they are so configured via the execution (by the controller 202) of the instructions of the applications stored in memory 204.

In some examples, the application 206 may comprise one or more machine learning algorithms trained to implement functionality described herein. However, alternatively, or in addition, the application 206 may comprise one or more programmatic algorithms.

As depicted, the memory 204 further stores a shareable data container module 224, an event data container module 226, and a notifier module 228, which comprises computer-readable programming instructions for implementing, respectively, the shareable data container engine 104, the event data container engine 106, and the notifier engine 108, for example when processed by the controller 202. While the modules 224, 226, 228 are depicted as being separate from the application 206, in other examples one or more of the modules 224, 226, 228 may be components of the application 206.

While structure of the event management device 110 and the communication devices 112 are not described in detail, the event management device 110 and the communication devices 112 are understood to have a similar structure as the one or more computing devices 102, but adapted for the respective functionality of the event management device 110 and the communication devices 112.

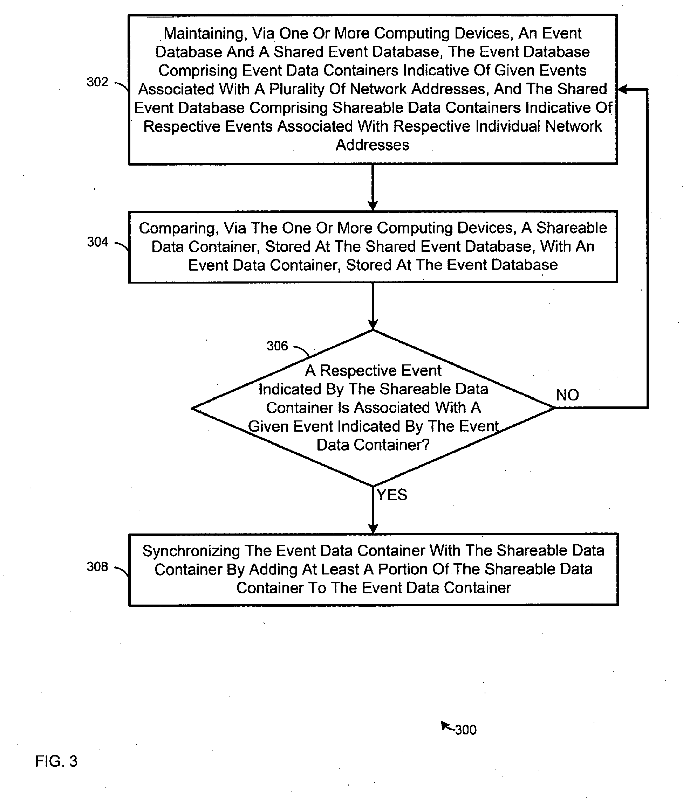

Attention is now directed to FIG. 3, which depicts a flowchart representative of a method 300 for synchronizing databases. The operations of the method 300 of FIG. 3 correspond to machine readable instructions that are executed by the one or more computing devices 102, and specifically the controller 202 of the one or more computing devices 102. In the illustrated example, the instructions represented by the blocks of FIG. 3 are stored at the memory 204 for example, as the application 206 and/or one or more of the modules 224, 226, 228. The method 300 of FIG. 3 is one way in which the controller 202 and/or the one or more computing devices 102 and/or the system 100 may be configured. Furthermore, the following discussion of the method 300 of FIG. 3 will lead to a further understanding of the system 100, and its various components.

The method 300 of FIG. 3 need not be performed in the exact sequence as shown and likewise various blocks may be performed in parallel rather than in sequence. Accordingly, the elements of method 300 are referred to herein as "blocks" rather than "steps." The method 300 of FIG. 3 may be implemented on variations of the system 100, as well.

Furthermore, while the method 300 is generally described with respect to the controller 202 and/or the one or more computing devices 102 implementing the method 300, it is understood that portions of the method 300 may be performed by one or more of the engines 104, 106, 108.

It is hence furthermore understood that while specific functionality of the engines 104, 106, 108 is described herein, functionality of two or more of the engines 104, 106, 108 may be combined.

At a block 302, the controller 202 and/or the one or more computing devices 102 maintains the event database 116 and the shared event database 114. As has been described, the event database 116 comprises event data containers 120 indicative of given events associated with a plurality of network addresses; and the shared event database 114 comprises shareable data containers 118 indicative of respective events associated with respective individual network addresses. Furthermore, such given events of the event data containers 120 may be defined by a plurality of provider objects associated with the plurality of network addresses associated with two or more communication devices 112 that are associated with two or more users as previously described. Similarly, such given events of the shareable data containers 118 may be defined by one or more provider objects associated with the respective individual network addresses associated with a communication device 112 associated with one. Put another way, it is understood that an event data container 120 is indicative of a given event/provider objects(s) associated with a plurality of users, while a shareable data container 118 is indicative of respective events/provider objects(s) associated with one user.

In some examples, the block 302 may include the controller 202 and/or the one or more computing devices 102 generating an event data container 120, for example via the event data container engine 106, when at least two shareable data containers 118 stored in the shared event database 114 share common data. For example, at least two shareable data containers 118 may indicate respective provider objects that represent flights to a common destination for same dates and/or represent hotel bookings for a same location and same dates, and/or represent car and/or taxi bookings for a same location and same dates,. Furthermore, the controller 202 and/or the one or more computing devices 102 may have access to a database (not depicted) of real-world events, such as conferences, meetings, and the like, and a real-world event indicated by such a database may occur at the same location and same dates indicated by the provider objects indicated by the at least two shareable data containers 118. Hence, the block 302 may include the controller 202 and/or the one or more computing devices 102 initially generating an event data container 120 comprising text and/or data, which indicates the real-world event, but without initially adding data from the at least two shareable data containers 118 to the event data container 120; however, in other examples, the block 302 may include the controller 202 and/or the one or more computing devices 102 initially generating an event data container 120 comprising text and/or data, which indicates the real-world event, and adding data from the at least two shareable data containers 118 to the event data container 120 as defined by the remainder of the method 300 described hereafter.

In some examples, the block 302 may include the controller 202 and/or the one or more computing devices 102 generating, for example via the event data container engine 106, an event data container 120 based on a request from one or more: a communication device 112; the event management device 110; a messaging application (e.g., operated by a communication device 112); and/or any other suitable device. For example, a user interacting with one or more of the aforementioned devices and/or applications may request that an event data container 120 be generated and provide text, and the like, in the request, defining a real-world event. It is understood that such a user may, or may not, be attending the event; in a particular example, a user who is a manager of users of at least a portion of the communication device 112 may interact with a respective communication device 112 and/or the event management device 110 and/or a messaging application to request that an event data container 120 be generated.

In some examples, the block 302 may include the controller 202 and/or the one or more computing devices 102 generating a shareable data container 118, for example when a communication device 112 interacts with the event management device 110 to request and/or provide one or more provider objects associated with a given event. For example the event management device 110 may interact with one or more provider systems 122 to provide the provider objects, which may be stored at a respective event container 126 at the database 124, and the event management device 110 may provide data indicative of the one or provider objects, which are associated with a network address of the communication device 112 that initiated the request, to the controller 202 and/or the one or more computing devices 102, which responsively generates a respective shareable data container 118, for example via the shareable data engine 104.

For example, the block 302 may include the controller 202 and/or the one or more computing devices 102 generating, via the event management device 110, an event data container 120, when a provider object associated with a network address associated with a communication device 112 is generated in association with the event management device 110. For example, respective network addresses associated with the communication devices 112 may be registered with the event management device 110 as being associated with an entity operating the one or more computing,devices 102. Hence, when a provider object associated with a network address associated with a communication device 112 is generated, the event-management device 110 may determine that such a provider object may be associated with the entity operating the one or more computing devices 102 and provide information indicative of the provider object associated with the one or more computing devices 102, which may generate an event data container 120, and a shareable data container 118, accordingly.

Hence, in some examples, an event data container 120 may be generated by a user of a communication device 112 and/or an event data container 120 may be generated via the event management device 110 communicating with the event data container engine 106, and the like.

For simplicity, hereafter the method 300 will be described hereafter with respect to the shareable data container 118-1 and the event data container 120-1. Hence, it is understood that the shareable data container 118-1 and the event data container 120-1 have been previously generated.

At a block 304, the controller 202 and/or the one or more computing devices 102 compares the shareable data container 118-1, stored at the shared event database 114, with an event data container 120-1, stored at the event database 116.

For example, at the block 304, the controller 202 and/or the one or more computing devices 102 may compare respective of the shareable data container 118-1 the event data container 120-1. Such a comparison may occur when the shareable data container 118-1 is initially generated, and the event data container 120-1 has been previously generated, or when the event data container 120-1 is initially generated, and the shareable data container 118-1 has been previously generated.

At a block 306, the controller 202 and/or the one or more computing devices 102 determines whether a respective event and/or provider object indicated by the shareable data container 118-1 (e.g., of the block 304) is associated with a given event indicated by the event data container 120-1 (e.g., of the block 304).

For example, the shareable data container 118-1 may indicate respective provider objects that represent a flight booking (e.g., a flight provider object), a hotel booking (e.g., a hotel provider object), a car and/or taxi booking (e.g., a car and/or taxi provider object) associated with a same location and same dates as a real-world event indicated by the event data container 120-1.

Similarly, the shareable data container 118-1 may indicate respective provider objects that represent a flight booking (e.g., a flight provider object), a hotel booking (e.g., a hotel provider object), a car and/or taxi booking (e.g., a car and/or taxi provider object) associated with a same location and same dates as other provider objects, associated with other users, indicated by the event data container 120-1. In these examples, it is understood that data representing respective events and/or provider objects associated with one or more other shareable data containers 118 may have been previously added to the event data container 120-1 (e.g., in a previous implementation of the method 300).

Put another way, at the block 306, the controller 202 and/or the one or more computing devices 102 may determine whether any data indicative of a respective event/provider object associated with the shareable data container 118-1 is the same as, or similar to, data indicative of a given event/provider object(s) associated with the shareable data container 118-1, for example due to data indicative of other respective events/provider objects having been previously added to the event data container 120-1 from other shareable data containers 118.

Furthermore, such a comparison may occur using programmatic algorithms configured to perform such a comparison and whether a respective event and/or provider object indicated by a shareable data container 118 is associated with a given event indicated by an event data container 120 and/or such a comparison may occur using via one or more machine learning algorithms that have been trained to perform such a comparison and whether a respective event and/or provider object indicated by a shareable data container 118 is associated with a given event indicated by an event data container 120.

In response to determining that a respective event/provider object indicated by the shareable data container 118-1 is associated with the given event indicated by the event data container 120-1 (e.g., a "YES" decision at the block 306), at a block 308, the controller 202 and/or the one or more computing devices 102 synchronizes the event database 116 and the shared event database 114 by adding at least a portion of the shareable data container 118-1 to the event data container 120-1. The synchronizing may occur via the communication interface 208.

In some examples, all of the data of the shareable data container 118-1 may be added to the event data container 120-1.

In other examples, the at least a portion of the shareable data container 118-1 that is added to the event data container 120-1 may be indicated as being shareable in the shareable data container. Put another way, the shareable data container 118-1 may indicate which of the data stored at the shareable data container 118-1 is shareable. For example, data relating to a specific provider object may be indicated as shareable and hence is added to the event data container 120-1, while data relating to other provider objects may not be shareable and hence is not added to the event data container 120-1.

In some of these examples, a communication device 112 may indicate which data is to be shared and/or which data is not to be shared, for example via interactions with the event management device 110, the functionality thereof being adapted to receive such indications of sharing or not sharing. In these examples, the event management device 110 may provide indications of which data is to be shared and/or which data is not to be shared to the controller 202 and/or the one or more computing devices 102, which generates the shareable data container 118-1 accordingly.

In other examples, the controller 202 and/or the one or more computing devices 102 may automatically indicate in the shareable data container 118-1 which of the data is shareable. For example a respective network address of a communication device 112 associated with the shareable data container 118-1 may be shareable by default, as may data indicative of certain types of provider objects, such as flight bookings, hotel bookings, car and/or taxi bookings, and the like. However, other data indicative of other types of information of provider objects, such as a seat number, a room number, and the like, may not be shareable and/or may only be shareable with certain other communication devices 112 and/or users thereof.

In any event, when data of the shareable data container 118-1 is added to the event data container 120-1, the databases 114, 116 are understood to be synchronized. Furthermore, when data from another shareable data container 118 is also added to the event data container 120-1, other functionality of the system 100 may be enabled, as described herein.

Before discussing such functionality, attention is briefly directed back to the block 306, in response to determining that the respective event indicated by the shareable data container 118-1 is associated with the given event indicated by the event data container 120-1 (e.g., a "NO" decision at the block 306), the controller 202 and/or the one or more computing devices 102 may continue implementing the method 300 from the block 302 (e.g., as depicted), and/or from the block 304, for example to continue maintaining the databases 114, 116 and/or to compare other shareable data containers 118 with the event data container 120-1.,

Further aspects of the method 300 will next be described, again with respect to the shareable data container 118-1 and the event data container 120-1.

In some examples, the event data container 120-1 is further indicative of a plurality of sub-events that are components of the given event represented by the event data container 120-1. For example, as previously described, the given event may be represented by a plurality of provider objects that represent different items provided by the one or more provider systems 102, and the plurality of provider objects may be associated with different communication devices 112 and/or users. Each of the provider objects represented by the event data container 120-1 may correspond to a different sub-event. For example, one or more of the provider objects may correspond to one or more flight bookings (e.g., for a same flight to a given destination, or different flights to the given destination), one or more of the provider objects may correspond to one or more hotel bookings (e.g., for a same hotel at the given destination, or different hotels at the given destination), one or more of the provider objects may correspond to one or more car and/or taxi bookings (e.g., from an airport at the given destination), and the like. Furthermore, the one or more provider objects that represent the plurality of sub-events are understood to be associated with different network addresses of different users, and furthermore, inconsistencies may occur between the plurality of sub-events and/or the one or more provider objects that represent the plurality of sub-events.

Such inconsistencies may be defined by rules of the application 206 and/or the event data container engine 106 (e.g., such rules may be represented by the application 206 and/or event data container engine 106 and/or the event data container module 226), and/or by one or more machine learning modules trained to identify such inconsistencies, and may include, but are not limited to:
- A threshold based majority (e.g., 75%, 80%, 90%, amongst other possibilities) of the hotel bookings being at a same given hotel, and other hotel bookings being at one or more different hotels, which may be indicative that the other hotel bookings should be changed to the same given hotel.
- A threshold distance (e.g., 0.25 km, 0.5 km, 1 km, amongst other possibilities) of a location of a hotel from a location of a given event associated with an event data container 120.
- A threshold based majority (e.g., 75%, 80%, 90%, amongst other possibilities) of the flight bookings being between the same airports and using a same given airline, and other flight bookings being between the same airports but on one or more different airlines and/or on longer flights, which may be indicative that the other flight bookings should be changed to the same given airline.
- A threshold duration (e.g., 120%, 150%, amongst other possibilities) of a flight indicated by an event data container 120, as compared to durations other flights indicated by an event data container 120.
- A threshold based majority (e.g., 75%, 80%, 90%, amongst other possibilities) of the car and/or taxi bookings being within a same give time period (e.g., within 30 mins, 45 mins, 1 hour, amongst other possibilities), which may be indicative that fewer car and/or taxi bookings could accommodate the users associated with the given event.
- A threshold based gap in cost of similar provider objects (e.g., two or more similar provider objects, such as those representing one or more flight bookings between the same airports); for example, a price of the highest cost flight may be 1.2x, 1.5x, 2x (amongst other possibilities) a price of other flights, which may be indicative that the one or more flight bookings could be changed to a lower cost flight.

Hence, while the term "inconsistencies" is understood to be relative, it is understood that a technical definition of the term may be defined by specific rules, one or more machine learning algorithms, and the like. In particular, the term "inconsistencies may refer to one or more provider objects that may be improved or optimized with regards to time, price, distance, and the like, by replacing one or more provider objects with one or more other provider objects and/or changing aspects of the one or more provider objects. Hence, any suitable rule and/or rules, defining any suitable inconsistency, and/or any suitable machine learning algorithm and/or machine learning algorithms, trained to identify any suitable inconsistency, is within the scope of the present specification.

In particular, in these examples, the event data container 120-1 is understood to comprise at least a portion of the shareable data container 118-1 and at least a respective portion of a further shareable data container 118 associated with the given event defined by the event data container 120-1, and the method may further comprise the controller 202 and/or the one or more computing devices 102:
- analyzing (e.g., via the event data container engine 106) respective data from the shareable data container 118-1 and the further shareable data container 118 stored at the event data container 120-1 to determine threshold-based inconsistencies therebetween;
- providing, to respective network addresses associated with the shareable data container 118-1 and the further shareable data container 118, respective links (e.g., a browser link and the like) to the event management device 110 that resolve the inconsistencies;
- receiving, from the event management device 110, further data indicative of updated respective events/provider objects associated with the respective network addresses, the further data resolving the inconsistencies; and
- updating the event data container 120-1 and one or more of the shareable data container 118-1 and the further shareable data container 118, based on the further data.

Hence, for example, respective data from the shareable data container 118-1 and a further shareable data container 118 stored at the event data container 120-1 may indicate that both are associated with a respective car rental booking at a same time from a same airport to a same hotel. In these examples, the controller 202 and/or the one or more computing devices 102 may determine that such respective car rental bookings represent an inconsistency, and communicate with the event management device 110 to generate respective links that combines the respective car rental bookings into one car rental booking, so that the users associated with the shareable data container 118-1 and the further shareable data container 118 are sharing a car rental upon arrival at the airport. The respective links may be provided to respective communication devices 112 associated with the shareable data container 118-1 and the further shareable data container 118. In particular, furthermore, the respective links that combine the respective car rental bookings into one car rental booking may comprise respective links to the respective communication devices 112 associated with the shareable data container 118-1 and the further shareable data container 118, with one respective link to cancel a respective car rental booking (e.g., cancelling or deleting an associated provider object) and to invite a user associated with the cancelled car rental booking to the uncancelled car rental booking (thereby modifying an associated provider object to include an added user), and the other respective link to inform the user associated with the uncancelled car rental booking of the other user being added to the uncancelled car rental booking. It is further understood that communications between the one or more computing devices 102 and the respective communication devices 112 associated with the shareable data container 118-1 and the further shareable data container 118 may occur via the notification engine 108, which uses the respective network addresses of the respective communication devices 112 to communicate with the one or more computing devices 102. Furthermore, the notification engine 108 may adapt the respective links according to respective applications being used at the respective communication devices 112 to communicate with the one or more computing devices 102, which may also be indicated in the shareable data container 118-1 and the further shareable data container 118 and/or the respective communication devices 112 may register with the one or more computing devices 102 to indicate such respective applications.

In this manner, a number of provider objects in the system 100 is reduced, thereby decreasing use of processing resources in the system 100, as only one car booking-related provider object is processed and not two car booking-related provider objects, which also frees up storage space in the system 100.

Furthermore, the event data container 120-1 and one or more of the shareable data container 118-1 and the further shareable data container 118 may be updated accordingly. For example, whichever of the shareable data container 118-1 and the further shareable data container 118 has had a car booking-related provider object cancelled may be updated to indicate the uncancelled car booking-related provider object. The other shared data container 118 may be updated to indicate that the uncancelled car booking-related provider object is now associated with another user and/or communication device 112. Similarly, the event data container 120-1 may be updated to indicate only one car booking-related provider object that is now shared between the shareable data container 118-1 and the further shareable data container 118.

While such an example is specific to car booking, other examples may be implemented to place users on a same flight and/or lower cost flights, to move some users to a same hotel as other users, and the like. Hence, the aforementioned links may serve to suggest and/or book alternative flights and/or alternative hotels, and the like.

Furthermore, such examples illustrate that groups of network addresses associated with an event data container 120 may be associated with a same sub-event. For example, groups of network addresses may be associated with a same car rental booking. More generally, two or more provider objects, associated with different network addresses (e.g., associated with different users) may be associated with a same sub-event, such as two or more provider objects that represent different bookings associated with a same flight; for example, two or more users may be booked on a same flight, the bookings represented by different respective provider objects indicated by different shareable data containers 118, which also include the network addresses of the users, and indications of the different respective provider objects and the respective network addresses may be combined in an event data container 120.

In these examples, the method 300 may further comprise the controller 202 and/or the one or more computing devices 102:
- analyzing (e.g., via the event data container engine 106) the event data container 120-1 to identify a given sub-event of the given event;
- generating a group of network addresses associated with the given sub-event;
- determining that a change to the given sub-event has occurred; and
- in response to determining that the change to the given sub-event has occurred, providing (e.g., via the notification engine 108) a message to the group of network addresses indicating the change to the given sub-event.

For example, the controller 202 and/or the one or more computing devices 102 may analyze the event data container 120-1 to determine that two or more network addresses associated with different communication devices 112 and/or different users are associated with respective provider objects representing a same flight (e.g., a given sub-event). The controller 202 and/or the one or more computing devices 102 may generate a group of two or more network addresses, and store such a group, and/or an indication thereof, in the event data container 120-1. In these examples, the controller 202 and/or the one or more computing devices 102 may receive, from the event management device 110, an indication that a time, a gate number, and the like of the flight has changed (and/or any other suitable change); such an indication may be generated by the event management device 110 and provided to the controller 202 and/or the one or more computing devices 102 upon receiving notice of such a change from a provider system 122 that provided the flight. The controller 202 and/or the one or more computing devices 102 may update the event data container 120-1 accordingly, for example via the event data container engine 106, and the notification engine 108 may be used to provide a message to the group of two or more network addresses indicating the change to the flight.

Other examples are within the scope of the present specification, and may include, but are not limited to, groups of network addresses respectively associated with a hotel booking, a car booking, a taxi booking and the like and, when changes occur to such bookings, the groups of respective network addresses may be notified of such changes.

Such an example illustrates more efficient use of resources and bandwidth in the system 100, for example to reduce numbers of messages generated and transmitted when changes occur to provider objects and/or sub-events in the system 100, (e.g., one message per change may be generated instead of a plurality of messages, one for each network address associated with provider objects for the flight).

The examples further illustrate that an event data container 120 indicative of a given event may be further indicative of a plurality of sub-events (e.g., provider objects) that are components of the given event. In these examples, again referring to the event data container 120-1, the method 300 may further comprise the controller 202 and/or the one or more computing devices 102:
- receiving, from the event management device 110, a request to join a given sub-event at the event data container 120, the request associated with a given network address (e.g., associated with one of the communication devices 112);
- one or more of: comparing the request with at least one given rule (e.g., represented by the application 206 and/or module 224, 226); and requesting approval of the request; and
- when one or more of the request meets the at least one given rule and the request is approved:
- synchronizing the event database 116 and the shared event database 114 by adding data indicative of the given sub-event to a respective shareable data container 118 associated with the given network address and to the event data container 120-1.

For example, a communication device 112 may interact with the event management device 110, for example by logging into a respective account. As has been previously described, the communication device 112 may be associated with an entity operating the one or more computing devices 102, and hence the event management device 110 may proactively, upon the communication device 112 logging into an account, retrieve, via the event data container engine 106, indications of the event data containers 120 including, in a specific example, the event data container 120-1, which may be provided to the communication device 112, for example in a Graphic User Interface (GUI). The communication device 112 may be used to search for flights and/or other items, such as car rental bookings, and/or events and/or sub-events that may be represented by provider objects.

Via the GUI, the event management device 110 may provide one or more invitations (e.g., via actuatable electronic buttons, and the like) to the communication device 112 to join one or more of the given sub-events indicated by the event data container 120-1. For example, the communication device 112 may be attempting to book a car rental at the same location and on a same date indicated by other provider objects indicated by the event data container 120-1. As such, the event management device 110 may determine that the communication device 112 is attempting to cause generation of a provider object representing a given sub-event, such as a car rental booking, that is already indicated by the event data container 120-1 and may instruct the event management device 110 to provide, via the GUI, to the communication device 112, an invitation (e.g., via actuatable electronic buttons, and the like) to the communication device 112 to join the given sub-event, such as joining the same car rental booking, for example.

The communication device 112 may be used to request to join the given sub-event, for example by actuating the actuatable button.

The request is provided to the controller 202 and/or the one or more computing devices 102 by the event management device 110 and, in some examples, when the request meets at least one given rule (e.g., indicated at by the application 206), the event database 116 and the shared event database by adding data indicative of the given sub-event to a respective shareable data container 118 associated with the given network address and to the event data container 120-1. For example, an indication of a provider object representing the car rental booking may be added to respective shareable data container 118 associated with the given network address and the event data container 120-1 may be updated to indicate that the user and/or network address associated with the respective shareable data container 118 has joined the provider object representing the car rental booking that is already indicated by the event data container 120-1. Adding the indication of the provider object representing the car rental booking is added to respective shareable data container 118 associated with the given network address may include generating the respective shareable data container 118.

However, when the rule is not met, the request may be denied, and the communication device 112 may be informed of such via the GUI (e.g., with a preprogrammed reason for the denial, such as "Car is full"), and the communication device 112 may attempt to initiate another car rental booking (e.g., the communication device 112 may attempt to initiate generation of another provider object representing another car rental booking that other users may join).

Such rules may define, for example, how many shareable data containers 118 may be associated with a car rental booking. In particular, a car may hold only four passengers (including the driver), hence a rule may define that a maximum of four shareable data containers 118 may join a car rental booking.

While such an example is directed towards a car rental booking, other rules for other types of provider objects may be applied depending on a type of provider object associated with a given sub-event. For example, some network addresses may be pre-approved for higher cost classes on flights, and other network addresses may not be pre-approved for higher cost classes on flights and one or more rules may define such approvals. As such, a request to join a given sub-event that represents a higher cost class on a flight may be approved when a network address associated with such a request meets a rule defining pre-approval for higher cost classes on flights, while another request to join a given sub-event that represents a higher cost class on a flight may be approved when a respective network address associated with such a request does not meet the rule defining pre-approval for higher cost classes on flights.

In other examples, approval of the request may be requested from a communication device 112, which may be associated with a manager, and/the like, of the entity managing the one or more computing devices 102 and/or approval of the request may be requested from a management computing device, which is configured to approve or deny such requests according to rules, which may be different from the aforementioned rules. For example, such rules may indicate budget exceptions, and the like, such that a network address that may not be pre-approved for higher cost classes on flights via the aforementioned rules, may nonetheless receive approval, for example due to an earlier budget request that has been approved elsewhere in the system 100.

Regardless, approval of the request may be requested from a given network address that may be associated with, and/or stored at, the event data container 120-1, and a communication device associated with the given network address may provide approval, or denial, of the request accordingly. When the request is approved the databases 114, 116 may be updated and synchronized accordingly as described above. However, when the request is denied the communication device 112 may be informed of such, as described above, and may attempt to initiate generation of another provider object.

In yet further examples, the method 300 may include the controller 202 and/or the one or more computing devices 102:
- determining that one or more further respective events/provider objects indicated by one or more respective further shareable data containers 118 are associated with the given event indicated by the event data container 120-1, the one or more further respective events/provider objects associated with further respective individual network addresses; and
- synchronizing at least a further portion of the event database 116 and the shared event database 114 by adding at least a respective portion of the one or more respective further shareable data containers 118 to the event data container 120-1.

In such an example, the method 300 may generally be repeated to add data from one or more respective further shareable data containers 118 to add at least a respective portion of the one or more respective further shareable data containers 118 to the event data container 120-1. For example, the blocks 304, 306, 308 may be repeated using other shareable data containers 118 to add at least a respective portion of one or more respective further shareable data containers 118 to the event data container 120-1. Such respective portions may represent a same respective event associated with the shareable data container 118-1 and the other shareable data containers 118 (e.g., a common event and/or sub-event represented by one or more provider objects), and/or such respective portions may represent one or more further respective events (e.g., one or more sub-events represented by one or more provider objects).

In some of these examples, the method 300 may further comprise the controller 202 and/or the one or more computing devices 102:
- requesting, via a given network address associated with the event data container 118-1, approval of one or more of: the respective event and at least one of the one or more further respective events;
- in response to receiving the approval, updating the event data container to indicate the approval; and
- in response to receiving a denial of the approval, providing a notification of the denial to an event management device to cancel one or more of: the respective event and at least one of the one or more further respective events.

Such an approval may hence be for a plurality of events/provider objects and such approvals may be requested from a communication device 112, which may be associated with a manager, as described above, or another communication device. Hence, a plurality of events/provider objects may be provided using one approval.

Furthermore, in some examples, such an approval may be requested regardless of whether the plurality of events/provider objects meet the aforementioned rules. In particular, such an approval may be requested for all provider objects for which indications have been added to the event data container 120-1 within a given time period. In particular, when a provider object is generated and purchased, a provider system 122 providing the provider object may include a grace period for returning the provider object, such as 24 hours, and the like. Hence, in these examples, such an approval may be requested for all provider objects for which indications have been added to the event data container 120-1 within a time period corresponding to the minimum grace period for the provider objects.

When the approval is received, the event data container 120-1 may be updated to indicate such approval, such that later approvals for provider objects later to the event data container 120-1 exclude requesting approval for provider objects that have already been approved.

On the other hand, when a denial is received, the controller 202 and/or the one or more computing devices 102 communicate with the event management device 110 to cancel the events/provider objects that were denied, and the event management device 110 may then communicate with the provider system 122 to cancel the events/provider objects and obtain refunds, etc.

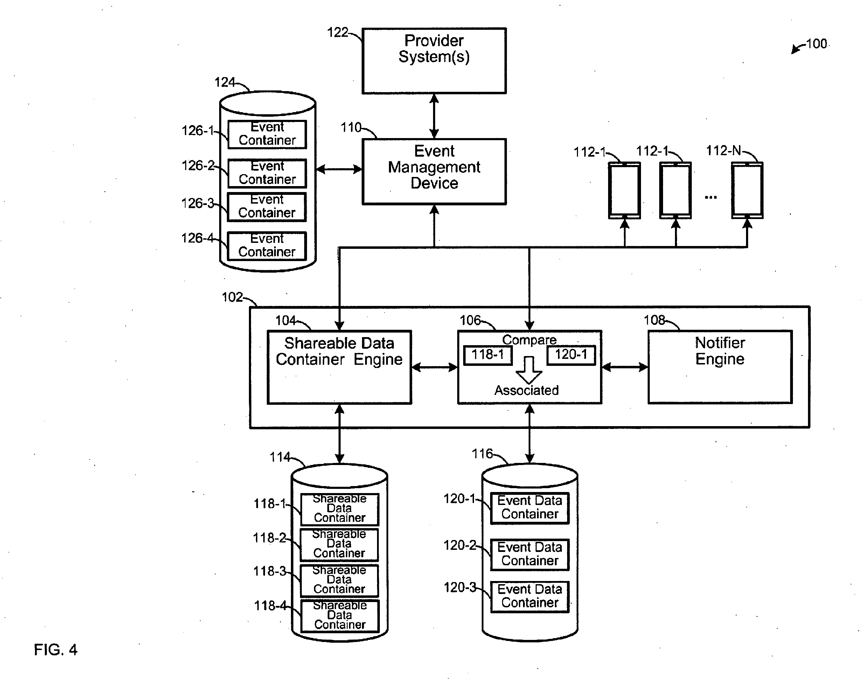

Attention is next directed to FIG. 4, FIG. 5 and FIG. 6, which illustrate aspects of the method 300. FIG. 4, FIG. 5 and FIG. 6 are similar to FIG. 1 with like components having like numbers.

Attention is first directed to FIG. 4, which depicts aspects of the block 304, and the block 306 of the method 300. It is understood in FIG. 4 that the block 302 has been implemented and/or is being implemented to maintain the databases 114, 116 as described above.

As depicted, the event data container engine 106 is comparing (e.g., at the block 304 of the method 300), the shareable data container 118-1 with the event data container 120-1. Furthermore, as depicted, the event data container engine 106 has determined that a respective event/provider object indicated by the shareable data container 118-1 is "Associated" with a given event indicated by the event data container 120-1 (e.g., a "YES" decision at the block 306).

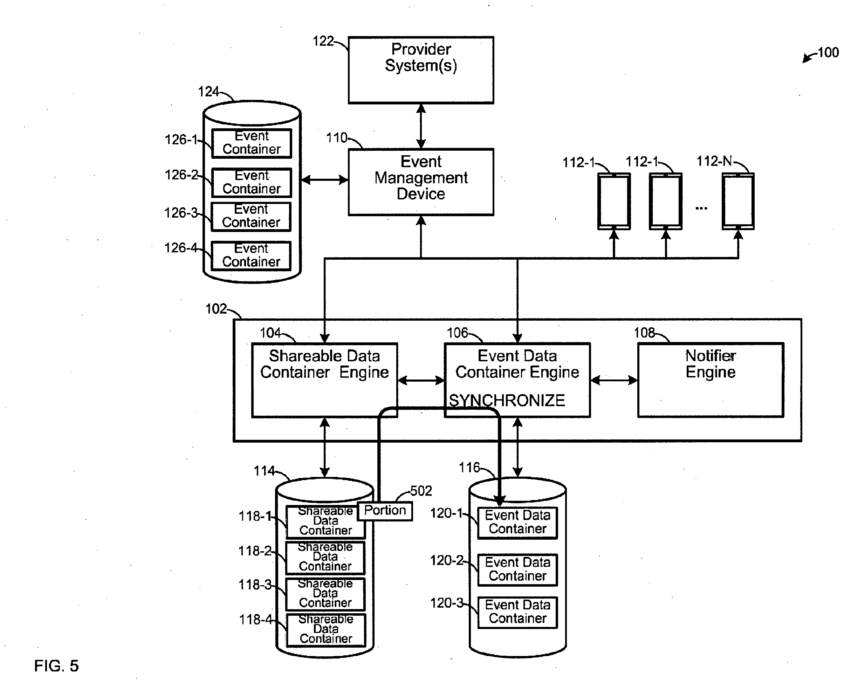

Attention is next directed to FIG. 5, which follows, in time, the example of FIG. 4.

In particular, as the event data container engine 106 has determined that a respective event/provider object indicated by the shareable data container 118-1 is "Associated" with a given event indicated by the event data container 120-1, the event data container engine 106 synchronizes the event database 116 and the shared event database 114 by adding at least a portion 502 of the shareable data container 118-1 to the event data container 120-1, such as a shareable portion. The adding may occur by requesting the portion 502 via the shareable data container engine 104.

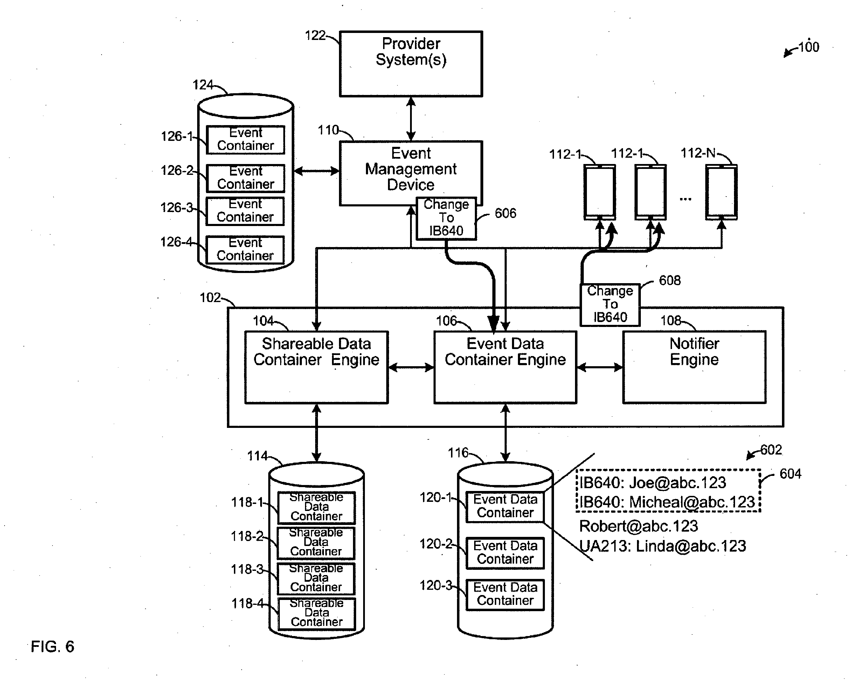

Attention is next directed to FIG. 6, which depicts details 602 of the event data container 120-1. In particular, the details 602 include a plurality of network addresses associated with a given event of the event data container 120-1, as well as associated sub-events associated with the plurality of network addresses.

In particular, it is understood that while four network addresses are depicted, the event data container 120-1 may include fewer than four network addresses, or more than four network addresses. It is further understood that the four network addresses (e.g., Joe@abc.123, Micheal@abc.123, Robert@abc.123, Linda@abc.123) may correspond to portions added to the event data container 120-1 from, respectively, the shareable data containers 118-1, 118-2, 118-3, 118-4 during various iterations of the blocks 304, 306, 308 of the method 300. For example, the network address Joe@abc.123 may be a component of the portion 502.

It is hence understood in the depicted example that the shareable data containers 118-1, 118-2, 118-3, 118-4 all indicate a respective event/provider object associated with a given event indicated by the event data container 120-1.

As depicted, three of the four network addresses are also depicted in association with respective provider objects represented by flight numbers. For example, the network addresses Joe@abc.123, Micheal@abc.123 are associated with provider objects represented by a same flight number "IB640", and the network address Linda@abc.123 is associated with a provider object associated with a flight number "UA213". However, the network address Robert@abc.123 is not associated with a flight number. Hence, for example, users associated with the network addresses Joe@abc.123, Micheal@abc.123 have booked the flight represented by the flight number "IB640", and the user associated with the network address Linda@abc.123 has booked the flight represented by the flight number "UA213". However, the user associated with the network address Robert@abc.123 has not yet booked a flight.

In the following description it will be assumed that the network addresses Joe@abc.123, Micheal@abc.123 are respectively associated with the communication devices 112-1, 112-2.

Furthermore, the flight number "IB640" may represent a given sub-event of the event data container 120-1. As such, the event data container engine 106 may generate a group 604 of network addresses associated with the given sub-event. In particular, as depicted, the network addresses Joe@abc.123, Micheal@abc.123 are in the group 604 while the other network addresses are not in the group 604.

As depicted, the event management device 110 has determined that a change is occurring to the flight represented by the flight number "IB640" (e.g., via a communication from a provider system 122, not depicted). As such, the event management device 110, having access to records of provider objects associated with the event data container 120-1 (e.g., in the form of the event containers 126), which may include provider objects represented by the flight number "IB640", provides a notification 606 of the change to the event data container engine 106. The change may, for example, include a changed time of departure for the flight. Furthermore, the event management device 110 may update provider objects represented by the event containers 126 accordingly.

Upon receiving the notification 606, the event data container engine 106 determines that a change to the flight has occurred and may provide the network addresses of the group 604 associated with the flight to the notifier engine 108, which may provide a notification 608 of the change to the communication devices 112-1, 112-2 associated with the network addresses of the group 604. While not depicted, the event data container engine 106 may update the event data container 120-1 to indicate the change and communicate with the shareable data container engine 104 to cause the shareable data containers 118-1 to be updated accordingly. Furthermore, while such an example is directed towards a change in flight, any suitable change to any suitable provider object, and/or any suitable notification thereof, is within the scope of the present specification (e.g., a change to a larger event defined by a plurality of provider objects, a change to a portion of a provider object (e.g., a flight segment), and/or a change to a hotel booking provider object, and/or a change to a car-rental booking provider object, and/or any other suitable change).

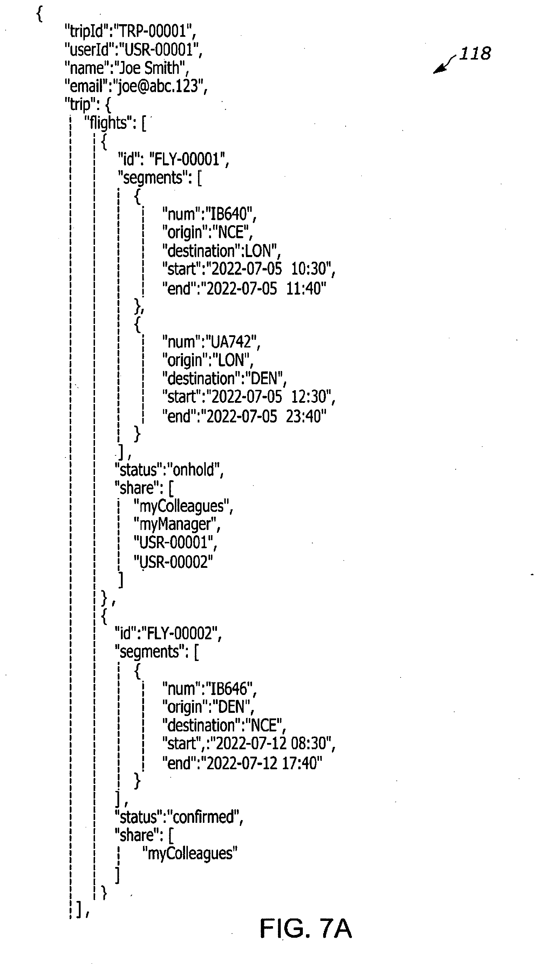

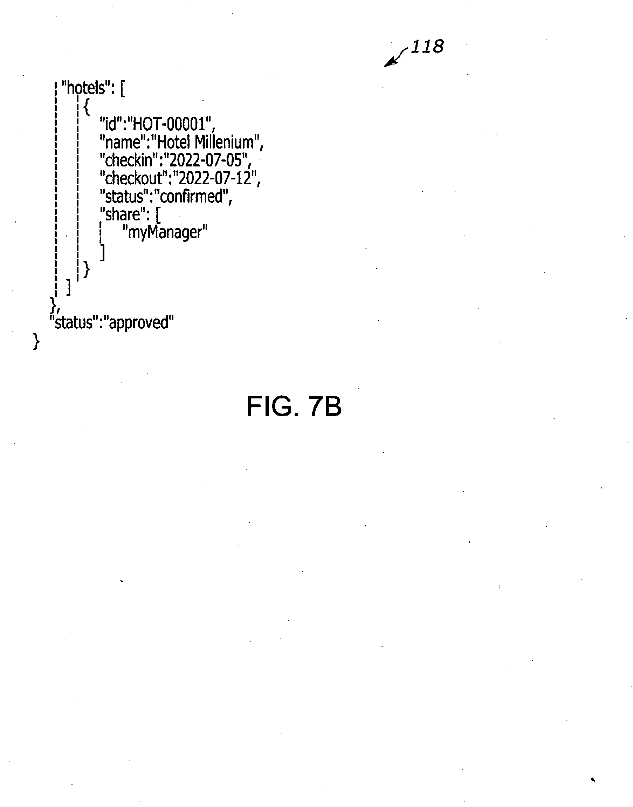

Attention is next directed to FIG. 7A and FIG. 7B, which depicts an example of a shareable data container 118 in a JSON (JavaScript Object Notation) format, though the shareable data containers 118 may be in any suitable format. It is understood that, together, FIG. 7A and FIG. 7B comprise the example of the shareable data container 118, with the example of FIG. 7B understood as being appended to the example of FIG. 7A.

In particular the shareable data container 118 depicted in FIG. 7A and FIG. 7B includes an identifier of the shareable data container 118 (e.g., "tripID" of "TRP-00001"), and a userID (e.g., "USR-00001"), name (e.g., "Joe Smith") and a network address (e.g., "Joe@abc.123") of an associated user. Furthermore, the shareable data container 118 includes an indication of one or more provider objects and/or one or more respective events (e.g., which includes a part of FIG. 7B) for example in the section labelled "trip".

In particular, with reference to FIG. 7A, the shareable data container 118 is associated with provider objects for flights between airports in Nice, France (e.g., "NCE"), London, England (e.g., "LON") and Denver, United States (e.g., "DEN") including a first group of flights, identified by an identifier "FLY-00001", that includes two flights on a same day (e.g., Nice to London, a flight identified by a flight number "IB640, similar to as depicted in FIG. 6, and London to Denver) of July 5, 2022, and a second flight, identified by an identifier "FLY-00002", that includes one flight (e.g., Denver to Nice) on July 12, 2022. With reference to FIG. 7B, the shareable data container 118 is associated with a provider object for a hotel booking, identified by an identifier "HOT-00001", from July 5, 2022 to July 12, 2022, for example at the "Hotel Millenium".

Each of the identified provider objects includes a "status" field and a "share" field. The "status" field may indicate a booking status of a provider object (e.g., as depicted "onhold" (e.g., not yet paid for), or "confirmed" (e.g., paid for)). The "share" field indicates whether information regarding an identified provider object is shareable and/or with which other users and/or groups the information regarding an identified provider object may be shared. For example, the first provider object identified by ""FLY-00001" may be shared with "myColleagues", "myManager", "USR-00001" (e.g., the user associated with the example shareable data container 118 of FIG. 7A and FIG. 7B) and "USR-00002"; it is understood that each of "myColleagues", "myManager", "USR-00001" and "USR-00002" may correspond to a user and/or groups of users associated with respective network addresses, which may, for example, be retrieved from a database (not depicted) that maps the terms "myColleagues", "myManager", "USR-00001" and "USR-00002" to respective network addresses. Put another way, "myManager", "USR-00001" and "USR-00002" may be mapped to respective network addresses associated with specific users and/or communication devices 112, while "myColleagues" may be mapped to a group of network addresses associated with specific users and/or communication devices 112 (e.g., such identifiers may be proxies for network addresses and/or groups of network addresses).

Similarly, provider objects identified by "FLY-00001" and "HOT-00001" may be respectively shared with "myColleagues" and "myManager".

As seen in FIG. 7B, the shareable data container 118 further includes a field of "status", which is applicable to the entirety of the shareable data container 118, which indicates that the provider objects (e.g., events) of the shareable data container 118 are "approved" (e.g., via a manager communication device, for example operated by a manager of the user "Joe Smith").

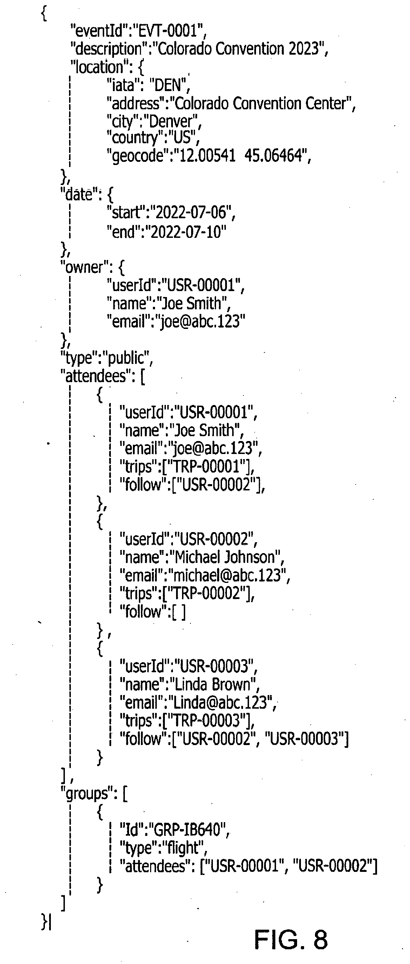

Attention is next directed to FIG. 8, which depicts an example of an event data container 120 in a JSON format, though the event data container 120 may be in any suitable format and/or structured in any suitable manner.

As depicted the event data container 120 includes an event identifier (e.g., "EVT-0001") and a description (e.g., " Colorado Convention 2023"), a location of a destination of the trip (e.g., an IATA code "DEN" for Denver), an address (e.g., Colorado Convention Center), and a city, country and geocode (e.g., a longitude/latitude, and the like) of the address. The event data container 120 further includes start and end dates and an "owner", as depicted the user indicated in the shareable data container 118 of FIG. 7A.

The event data container 120 further includes a field "type" indicating that the event data container 120 is "public" and hence any user associated with the entity that operates the one or more computing devices 102 may have data from associated shareable data containers 118 added thereto. In other examples, the field "type" may be "private" and/or indicate a subset of such users, such as users from a given department.

The event data container 120 further includes fields for "attendees", which indicate includes portions of shareable data containers 118 added to the event data container 120. For example, a first attendee is "Joe Smith" and the associated fields are understood to have been added from the shareable data container 118 of FIG. 7A and FIG. 7B, including a name, userID and network address. Furthermore, the fields associated with "Joe Smith" include a pointer "TRP-00001" of the shareable data container 118 of FIG. 7A and FIG. 7B, indicating that all of the shareable data container 118 of FIG. 7A and FIG. 7B has been added to the event data container 120 of FIG. 8. Alternatively, rather than a pointer, the section of the shareable data container 118 of FIG. 7A and FIG. 7B labelled "trip" may be added to the event data container 120. Indeed, it is understood herein that adding at least a portion of a shareable data container 118 to an event data container 120 may include, but is not limited to, adding a pointer to shareable data container 118 to the event data container 120. For example, it is understood that the event data container engine 106 may process and/or analyze the event data container 120 depicted in FIG. 8 and when the pointer "TRP-00001" is identified, the event data container engine 106 may use the pointer "TRP-00001" to communicate with the shareable data container engine 104 to retrieve the shareable data container 118 that is identified by the pointer "TRP-00001".

As depicted, the event data container 120 includes two other "attendees" and fields for such are similar to the fields for the attendee "Joe Smith", but populated with respective data. In particular, the attendee "Michael Johnson" has a userID "USER-00002" and a network address of "michael@abc.123", and is associated with a pointer to a respective shareable data container 118 identified by "TRIP-00002". Such a respective shareable data container 118 may indicate that "Michael Johnson" is also on a same flight as "Joe Smith", such as a flight identified by a flight number "IB640".

Similarly, the attendee "Linda Brown" has a userID "USER-00003" and a network address of "linda@abc.123", and is associated with a pointer to a respective shareable data container 118 identified by "TRIP-00003", which, with reference to FIG. 6, may indicate a provider object that corresponds to a flight identified by a flight number "UA213".

With reference to FIG. 6, a portion of a respective shareable data container 118 for an "attendee" having a network address of "robert@abc.123" may later be added to the depicted event container 120, for example when a communication device associated with the network address of "robert@abc.123" is used to generate a provider object corresponding to a respective event associated with a given event indicated by the depicted event container 120.

As depicted, the event data container 120 further includes respective "follow" fields for each of the attendees that includes userIDs of other attendees of the event data container 120, or may be blank or null (e.g., the follow field for "Michael Smith" is blank or null). As such, when changes to provider objects associated with an attendee who is being followed changes and/or associated events occur, a notification may be provided to a network address of the attendee who is following the followed attendee. For example, "Joe Smith" is following "Michael Johnson" hence when provider objects indicated by shareable data container 118 that is identified by the pointer "TRP-00002" change and/or associated events occur (e.g., as determined by a notification from received from the event management device 110), a notification may be provided to the network address "joe@abc.123". However, such an example assumes that the shareable data container 118 that is identified by the pointer "TRP-00002" has approved sharing of such information by including the userID of "USR-00001" in the field "share".

As depicted, the event data container 120 further includes a field for "groups". For example, as depicted, a group may correspond to the group 604, with userIds of users associated with network addresses of the group 604 included in the group. In particular, the indicated group is understood to have been generated by the event data container engine 106, which identifies network addresses associated with the flight "IB640" and groups them together. However, as depicted, rather than explicitly include the network addresses associated with the flight "IB640" (e.g., as shown in the group 604), the indicated group identifies the userIDs of the attendees that are associated with network addresses associated with the flight "IB640".

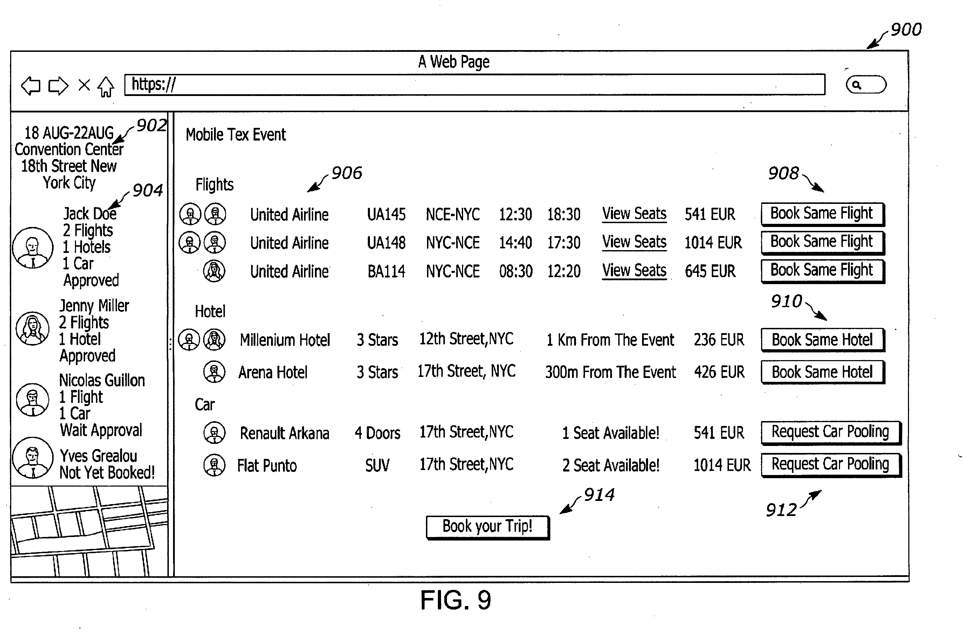

Attention is next directed to FIG. 9, which depicts an example GUI 900 that may be provided at a display screen of a communication device 112, for example in an application thereof used to communicate with the event management device 110. While FIG. 9 is described with respect to "users" it is understood that such users are represented in the system 100 by respective network addresses, as previously described herein. Furthermore, it is understood that the example of FIG. 9 is for different attendees and/or users and/or different communication devices 112 and/or network addresses as the examples of FIG. 4, FIG. 5, FIG. 6, FIG. 7A, FIG. 7B and FIG. 8.

As depicted, the GUI 900 includes an indication 902 of a given event associated with an event data container 120, as well as an attendee section 904 indicating users associated with the event data container 120 (e.g., each associated with a respective network address), and a summary section 906 that summarizes the provider objects and/or sub-events associated with the given event. The summary section 906, for example, may list flights, hotel bookings and car rental bookings associated with provider objects and actuatable buttons 908, 910, 912 to respectively "join" a flight, a hotel booking and/or a car rental booking. For example, as has been previously described the GUI 900 may enable a user of a communication device 112 to request to join a given sub-event (e.g., a flight, a hotel booking, and/or a car rental booking) of the event data container, the request associated with a given network address.

For example, the sections 904, 906 further indicate which users have booked which provider objects. For example, the user Jack Doe has booked flights identified by flight numbers "UA145" and "UA148" (e.g., "IB640"), a hotel and a car rental. In contrast, the user Nicolas Guillon has booked the same flights as Jack Doe, but a different hotel and a different car rental. In further contrast, the user Jenny Miller has booked a different flight (e.g., "BA114") but the same hotel as Jack Doe. The various provider objects booked by the users are indicated by text adjacent their images in the attendee section 904, and by icons of their images in the summary section 906.

As depicted, however, the user Yves Grealou has not yet booked any provider objects and hence may use the GUI 900 to book a flight, a hotel and/or to join a car rental booking associated with another user. It is understood that, in some examples, until the user Yves Grealou books a provider object, there may be no respective shareable data container 118 associated with the user Yves Grealou. In these examples, an event data container 120 indicating the provider objects identified in the GUI 900 may omit a portion of, and/or a pointer to, a shareable data container 118 associated with the user Yves Grealou, until such a shareable data container 118 associated with the user Yves Grealou is generated and a portion of, and/or a pointer to, shareable data container 118 the added to the event data container 120. Hence, the GUI 900 may be used to populate a shareable data container 118 and/or an event data container 120.

The GUI 900 may be' further provided prior to interacting with the event management device 110. For example. The GUI 900 may be populated based on the data in an event data container 120 and may be provided to a communication device 112 in an application, for example via the event data container engine 106 and/or the notification engine 108. For example, a user operating a communication device 112 may be presented with a list of available given events represented by the event data containers 120 and/or an owner, and the like, of an event data container 120 may provide a message to a communication device 112 that invites a user to "join" a given event indicated by the event data container 120. The GUI 900 may represent an example of such a message. Hence, as depicted, the GUI 900 may be provided at a communication device 112 associated with a network address of the user Yves Grealou.

As such, the GUI 900 further includes an actuatable button 914 that may be actuated to initiate communications with the event management device 110 to generate provider objects on the basis of actuation of the one or more of the actuatable buttons 908, 910, 912.

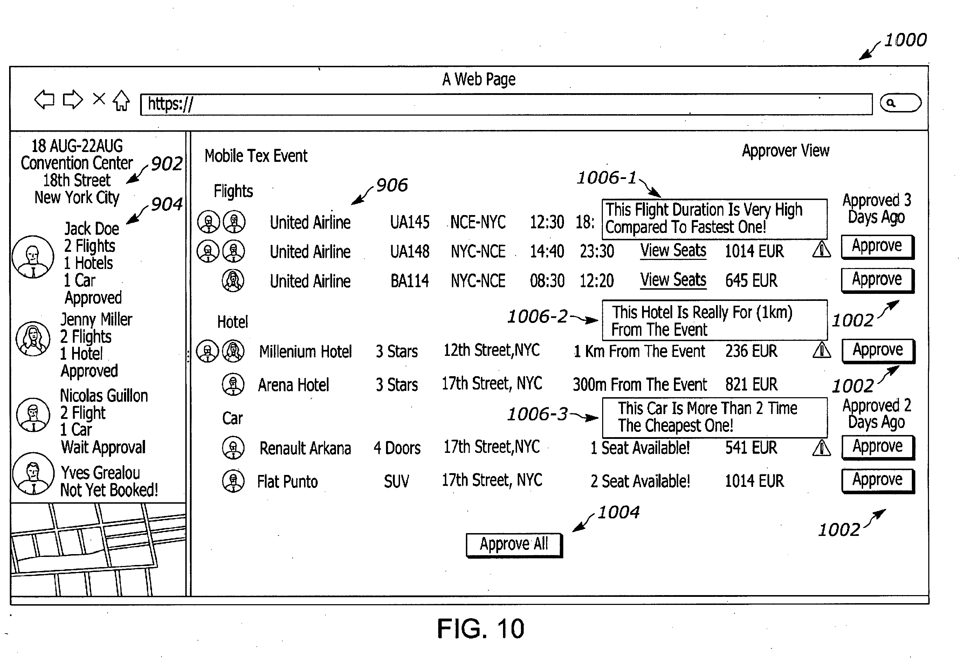

Attention is next directed at FIG. 10, which depicts a GUI 1000 that may be provided at display screen of a communication device 112 that is configured to approve the sub-events/provider objects of an event data container 120, for example, the same event data container 120 that indicates the provider objects of the GUI 900, and hence includes a similar indication 902 and similar sections 904, 906. As such, the GUI 1000 is substantially similar to the GUI 900 but rather than include electronic buttons 908, 910, 912, 914, the GUI 1000 includes approval buttons 1002 that may be actuated by a user of the communication device 112 at which the GUI 1000 is being provided to approve respective provider objects. As depicted, indications are further provided adjacent provider objects that have been previously approved, and which may also include an indication of when such approval occurred (e.g., such as text "Approved 3 days go). Such information may also be stored in the event data container 120. Hence, the event data container 120 may be used not only as a central repository of all provider objects and/or sub-events associated with a given event, but also as a repository for tracking approvals and the like.

As an alternative, the GUI 1000 further includes an electronic button 1004, which may be actuated by a user of the communication device 112 at which the GUI 1000 is being provided to approve all the respective provider objects having an adjacent respective approval button 1002.

As depicted, the GUI 1000 further includes indications 1006-1, 1006-2, 1006-3 of inconsistencies (e.g., indications 1006 and/or an indication 1006).

For example, the 1006-1 is provided adjacent an indication of a flight-booking sub-event/provider object (e.g., the combination flights "UA145", "UA148") indicating that the flight duration is above a threshold duration relative to a fastest flight (e.g., flight "BA 114").

For example, the indication 1006-2 is provided adjacent an indication of a hotel-booking sub-event/provider object of indicating that the hotel is more than a threshold distance from the given event indicated by the indication 902.

For example, the indication 1006-3 is provided adjacent an indication of a car rental-booking sub-event/provider object of indicating that a price of the car-rental is more than a threshold price relative to a price of a cheapest car rental.

Such indications 1006 may be used to make a decision as to approve or deny the various provider objects. While not depicted the indications 1006 may be provided with actuatable electronic buttons, which may be used to generate links to resolve the inconsistencies indicated by the indications 1006, has been previously described.

However, in some examples the GUI 1000 may be provided without the indications 1006.

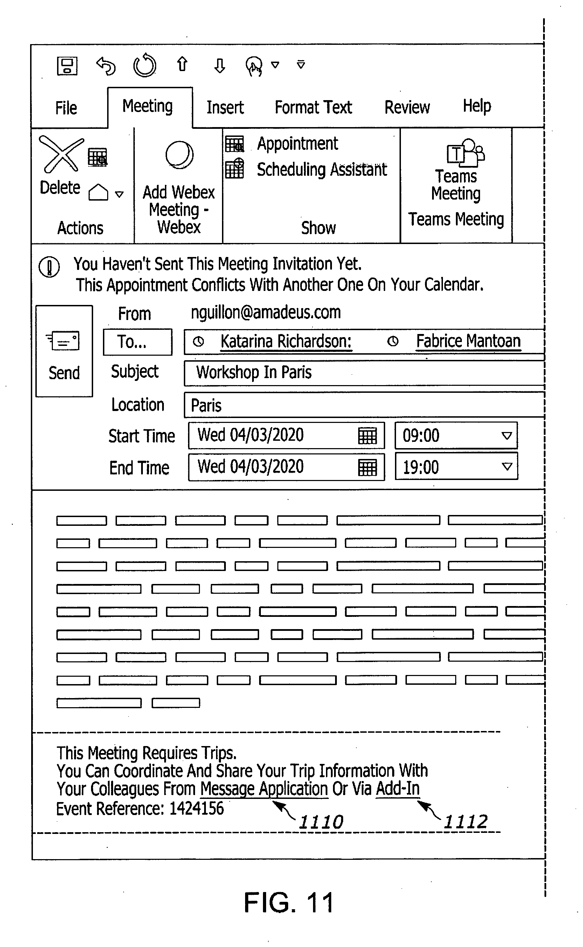

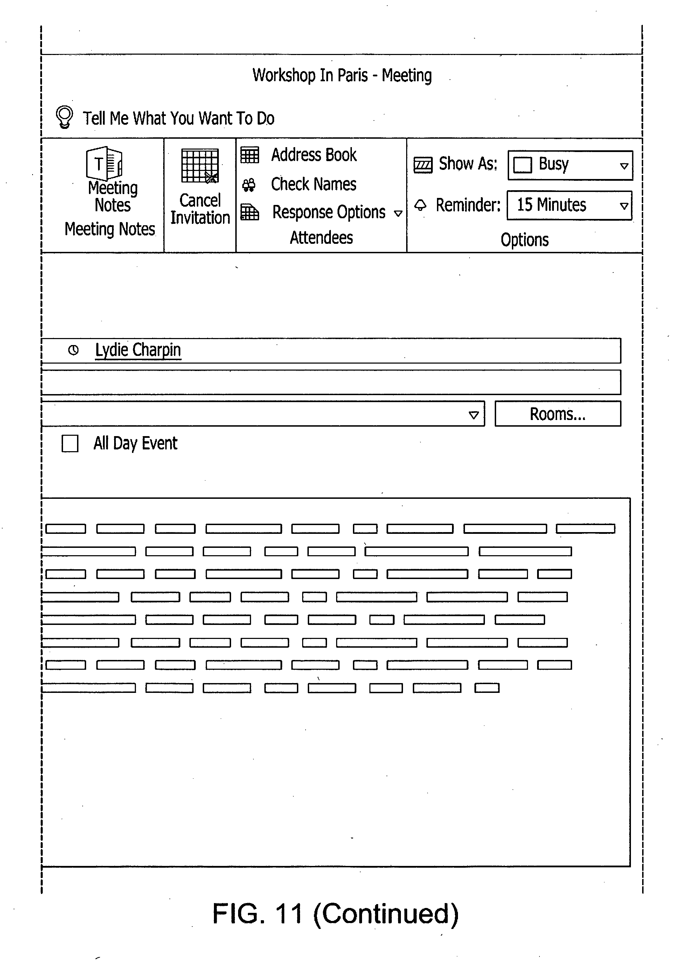

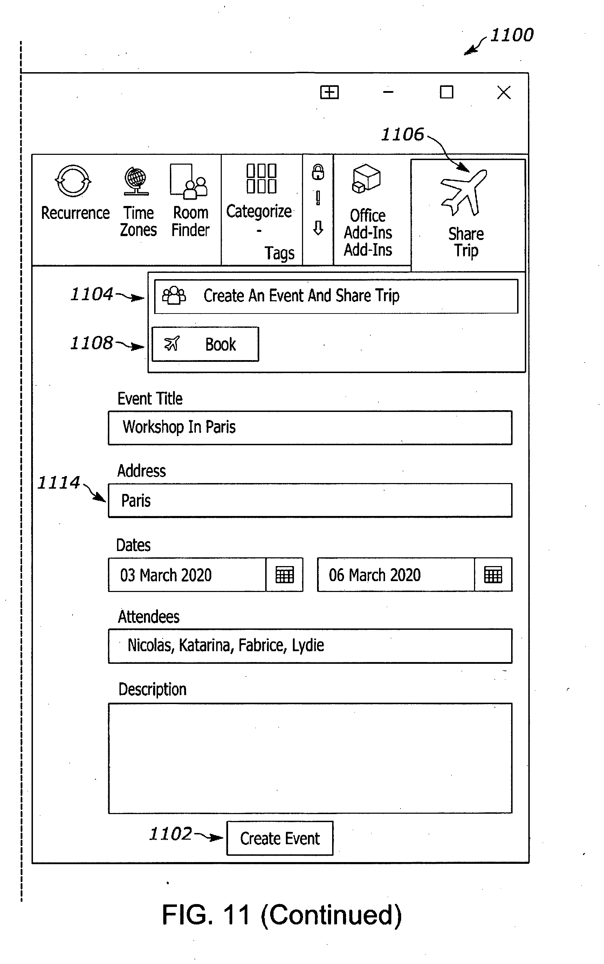

Attention is next directed to FIG. 11, which depicts a messaging and/or an email GUI 1100 that depicts a message and/or email regarding a given event, being drafted by a sender. The GUI 1100 may be provided at a display screen of a communication device 112, for example in a messaging and/or an email application. For example, as depicted an email is being drafted to add a given event to a calendar application with a subject, location and dates. The email may be drafted at a communication device 112 associated with a network address of a user who will attend the event (e.g., and hence have an associated shareable data container 118 generated), or the email may be drafted at a communication device 112 associated with a network address of a manager of users who will attend the event (e.g., and hence have an associated shareable data container 118 generated), though the manager may not attend the event.

The GUI 1100 (and/or the messaging and/or the email application) is adapted to include various electronic buttons 1102, 1104, 1106, 1108, 1110, 1112 to generate provider objects and/or a shareable data container 118 and/or an event data container 120, as well as a section 1114 that includes fields to receive data used to populate fields of a shareable data container 118 and/or an event data container 120.

For example the section 1114 includes fields for a given event title (e.g., populated from a subject of the email), an address (e.g., initially populated from a location of the email), dates (e.g., populated ), possible attendees (e.g., populated from a "To" field of the GUI 1100 and the sender) and a description. While some of such fields may be populated from the email, they may be editable. The section 114 includes an electronic button 1102, which, when actuated, may cause the communication device 112 (and/or the messaging and/or the email application) to communicate with the event data container engine 106 to cause the event data container engine 106 to generate an event data container 120 for the given event, the description, location, date and owner fields of the event data container 120 (e.g., see FIG. 8) being populated by data from the fields of the section 1114. Furthermore, an owner of the given event may comprise the sender of the message and/or email of the depicted GUI 11100 (e.g., with a network address and name of the sender used to populate the owner fields). Fields "eventID" and "userID" of the event data container 120 may be populated automatically and/or via a database of eventIDs and/or userIDs.

Hence, these examples illustrate that a given event data container 120 may be generated prior to generation of provider objects in the system 100.

Furthermore, the electronic buttons 1104, 1106, when actuated, may be used to notify network addresses associated with the users identified in the "To" field of the GUI 1100 of the event (e.g., in addition to the message and/or email, which may only be for adding the event to a calendar application).

The electronic button 1108 may be used to open another GUI (e.g., similar to the GUI 900) to communicate with the event management device 110 to generate provider objects for the event, which may in turn cause a shareable data container 118 to be generated, with certain fields populated from the fields of the section 114 (e.g., title, address, dates, and the like).

The electronic buttons 1110, 1112 may be used to open another messaging application to share information about the event and/or to use an add-in (e.g., a dedicated add-in) of the messaging application, which may be used to receive notifications (e.g., of changes) associated with the given event, and the like.

Furthermore, the message and/or email as received at communication devices 112 may include one or more electronic buttons similar to the electronic buttons 1102, 1104, 1106, 1108, 1110, 1112 and/or a section similar to the section 1114, which may be used to cause respective shareable data containers 118 to be generated associated with network addresses that receive the message and/or email.

Attention is next directed to FIG. 11, which depicts a calendar GUI 1200 for a given user that depicts a calendar, as well as a section 1202 that indicates event data container 120 associated the given user's network address. The GUI 1200 may be provided at a display screen of a communication device 112, for example in a calendaring application and, in some examples, may be a GUI provided by the event management device 110.

As depicted the section 1202 indicates that the given user's network address is associated with two event data containers 120 and each portion of the section 1202 associated with a respective event data container 120 includes information similar to that depicted in section 904, though graphically depicted, that shows different events/provider objects associated with different shareable data containers 118 associated with a respective event data container 120, and which generally indicate which users/network addresses are associated with a respective given event and what provider objects have been generated in association with the respective shareable data containers 118 (e.g., which indicates provider object bookings made by respective users). Furthermore, each portion of the section 1202 associated with a respective event data container 120 may also comprise an electronic button which, when actuated, may cause a GUI to be provided similar to the GUI 900.

The section 1202 includes an electronic button 1204, which, when actuated, may cause a new event data container 120 to be generated, similar to the electronic button 1102. When the electronic button 1204, another GUI may be provided, which includes fields similar to the fields of the section 1114.

Yet further features are within the scope of the present specification.

For example, it is understood that a portion of one shareable data container 118 may be added to more than one event data container 120. In these examples, information from shareable data container 118 may indicate respective events/provider objects associated with more than one given event indicated by respective event data containers 120 (e.g., two conferences may be occurring in one city, one shareable data container 118 may indicate provider objects for both conferences, and two and two different event data containers 120 be respectively associated with the two conferences; as such, a portion of one shareable data container 118 by added to both of the different event data containers 120).

For example, while events and/or provider objects indicated by the data containers 118, 120 have been described herein as being generated in conjunction with the event management device 110, in other examples events and/or provider objects may be generated and added to the data containers 118, 120 from other devices. For example, a communication device 112 may be used to book an excursion, and the like, from a provider system 122 that does not interact with the event management device 110, and such a provider system 122 may provide a message, such as an email, confirming the booking. A messaging and/or email application that indicates the booking (e.g., an associated event and/or provider object) may include an extension that extracts such information from the message and/or email and adds such information to an associated shareable data container 118 and an associated event data container 120.

Furthermore, a communication device 112 may be used to cancel a respective event and/or provider object via the event management device 110, and an associated shareable data container 118 and an associated event data container 120 may be updated accordingly, for example via notifications from the event management device 110 indicating the cancellation.

Furthermore, an event data container 120 may be used to track a budget associated with a given event. For example, the event data container 120 may include costs of events/provider objects and a budget limit may be included in the event data container 120. When a total cost of events/provider objects associated with the event data container 120 reaches a threshold amount (e.g., 80% of a budget limit, 90% of a budget limit, amongst other possibilities) a message may be provided to network address associated with an owner of the event data container 120 and/or a manager thereof. Such budget limits may be configured at an event data container 120 by the owner of the event data container 120 and/or a manager thereof.

While not depicted, the system 100 may further comprise a dashboard engine that may be accessed by a communication device 112 (e.g., via a display screen thereof) to show a status of various events associated with one or more event data container 120.

As should by now be apparent, the operations and functions of the devices described herein are sufficiently complex as to require their implementation on a computer system, and cannot be performed, as a practical matter, in the human mind. In particular, computing devices, and the like, such as set forth herein are understood as requiring and providing speed and accuracy and complexity management that are not obtainable by human mental steps, in addition to the inherently digital nature of such operations (e.g., a human mind cannot synchronize databases, interface directly with, RAM or other digital storage, cannot transmit or receive electronic messages, among other features and functions set forth herein).

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, XZ, and the like). Similar logic can be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein can be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein can be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method (300) comprising:
maintaining (302), via one or more computing devices (102), an event database (116) and a shared event database (114), the event database (116) comprising event data containers (120) indicative of given events associated with a plurality of network addresses, and the shared event database (114) comprising shareable data containers (118) indicative of respective events associated with respective individual network addresses;
comparing (304), via the one or more computing devices (102), a shareable data container (118), stored at the shared event database (114), with an event data container (120), stored at the event database (116); and
in response to determining (306), via the one or more computing devices (102), that a respective event indicated by the shareable data container (118) is associated with a given event indicated by the event data container (120), synchronizing (308) the event database (116) and the shared event database (114) by adding at least a portion of the shareable data container (118) to the event data container (120).

2. The method (300) of claim 1, wherein the at least a portion of the shareable data container (118) that is added to the event data container (120) is indicated as being shareable in the shareable data container (118).

3. The method (300) of any one of claim 1 to claim 2, wherein the event data container (120) is further indicative of a plurality of sub-events that are components of the given event, the method (300) further comprising:
analyzing the event data container (120) to identify a given sub-event of the given event;
generating a group of network addresses associated with the given sub-event;
determining that a change to the given sub-event has occurred; and
in response to determining that the change to the given sub-event has occurred, providing a message to the group of network addresses indicating the change to the given sub-event.

4. The method (300) of any one of claim 1 to claim 3, wherein the event data container (120) is further indicative of a plurality of sub-events that are components of the given event, the method (300) further comprising:
receiving, from an event management device, a request to join a given sub-event at the event data container (120), the request associated with a given network address;
one or more of: comparing the request with at least one given rule; and requesting approval of the request; and
when one or more of the request meets the at least one given rule and the request is approved:
synchronizing the event database (116) and the shared event database (114) by adding data indicative of the given sub-event to a respective shareable data container (118) associated with the given network address and to the event data container (120).

5. The method (300) of any one of claim 1 to claim 4, further comprising:
determining that one or more further respective events indicated by one or more respective further shareable data containers (118) are associated with the given event indicated by the event data container (120), the one or more further respective events associated with further respective individual network addresses; and
synchronizing at least a further portion of the event database (116) and the shared event database (114) by adding at least a respective portion of the one or more respective further shareable data containers (118) to the event data container (120).

6. The method (300) of claim 5, further comprising:
requesting, via a given network address associated with the event data container (120), approval of one or more of: the respective event and at least one of the one or more further respective events;
in response to receiving the approval, updating the event data container (120) to indicate the approval; and
in response to receiving a denial of the approval, providing a notification of the denial to an event management device to cancel one or more of: the respective event and at least one of the one or more further respective events.

7. The method (300) of any one of claim 1 to claim 6, wherein the event data container (120) comprises at least a portion of the shareable data container (118) and at least a respective portion of a further shareable data container (118) associated with the given event, the method (300) further comprising:
analyzing respective data from the shareable data container (118) and the further shareable data container (118) stored at the event data container (120) to determine threshold-based inconsistencies therebetween;
providing, to respective network addresses associated with the shareable data container (118) and the further shareable data container (118), respective links to an event management device that resolve the inconsistencies;
receiving, from the event management device, further data indicative of updated respective events associated with the respective network addresses, the further data resolving the inconsistencies; and
updating the event data container (120) and one or more of the shareable data container (118) and the further shareable data container (118), based on the further data.

8. The method (300) of any one of claim 1 to claim 7, further comprising:
generating the event data container (120) when at least two shareable data containers (118) stored in the shared event database (114) share common data.

9. The method (300) of any one of claim 1 to claim 8, further comprising:
generating the event data container (120) based on a request from one or more of: a communication device (112); an event management device (110); and a messaging application.

10. A device (102) comprising:
a communication interface (208); and
a controller (202) configured to implement the method (300) of any one of claims 1 to 9.

11. A non-transitory computer-readable medium (204) storing a computer program (206), wherein execution of the computer program (206) is to implement the method (300) of any one of claims 1 to 9.
